(19) Europäisches Patentamt
European Patent Office
Office européen des brevets

(11) EP 1 726 975 B1

(12) **EUROPEAN PATENT SPECIFICATION**

(45) Date of publication and mention of the grant of the patent:
**13.12.2017 Bulletin 2017/50**

(21) Application number: **05720351.5**

(22) Date of filing: **09.03.2005**

(51) Int Cl.:
***G02B 1/10*** *(2015.01)* ***G02C 7/02*** *(2006.01)*
***G02B 1/11*** *(2015.01)* ***C09D 183/04*** *(2006.01)*
*C08J 7/04* *(2006.01)* *C08K 3/22* *(2006.01)*

(86) International application number:
**PCT/JP2005/004079**

(87) International publication number:
**WO 2005/088352 (22.09.2005 Gazette 2005/38)**

(54) **METHOD FOR PRODUCING PLASTIC LENS**

VERFAHREN ZUR HERSTELLUNG EINER KUNSTSTOFFLINSE

PROCEDE POUR PRODUIRE UNE LENTILLE PLASTIQUE

(84) Designated Contracting States:
**AT BE BG CH CY CZ DE DK EE ES FI FR GB GR HU IE IS IT LI LT LU MC NL PL PT RO SE SI SK TR**

(30) Priority: **16.03.2004 JP 2004074651**

(43) Date of publication of application:
**29.11.2006 Bulletin 2006/48**

(73) Proprietor: **HOYA CORPORATION**
**Shinjuku-ku,**
**Tokyo 161-8525 (JP)**

(72) Inventors:
- **KOJIMA, Hiroshi**
  **c/o Hoya Corporation**
  **Shinjyuku-ku, Tokyo 1618525 (JP)**
- **KOYAMA, Yoshinari**
  **c/o Nissan Chemical Ind. Ltd.**
  **Sodegaura-shi, Chiba 2990266 (JP)**
- **ASADA, Motoko**
  **c/o Nissan Chemical Ind., Ltd.**
  **Sodegaura-shi, Chiba 2990266 (JP)**

(74) Representative: **Beckmann, Claus et al**
**Kraus & Weisert**
**Patentanwälte PartGmbB**
**Thomas-Wimmer-Ring 15**
**80539 München (DE)**

(56) References cited:
**EP-A2- 1 041 040** **EP-A2- 1 041 404**
**EP-A2- 1 193 285** **JP-A- 1 027 635**
**JP-A- 1 027 635** **JP-A- 2000 063 754**
**JP-A- 2000 281 973**

EP 1 726 975 B1

Note: Within nine months of the publication of the mention of the grant of the European patent in the European Patent Bulletin, any person may give notice to the European Patent Office of opposition to that patent, in accordance with the Implementing Regulations. Notice of opposition shall not be deemed to have been filed until the opposition fee has been paid. (Art. 99(1) European Patent Convention).

Printed by Jouve, 75001 PARIS (FR)

## Description

### TECHNICAL FIELD

The present invention relates to a method for producing a plastic lens. More particularly, the present invention relates to a method for producing a plastic lens which comprises forming a hard coat film by coating a plastic substrate with a coating composition comprising (A) modified colloid particles of a stannic oxide-zirconium oxide composite having diameters of 4.5 to 60 nm which are formed by coating the surface of colloid particles of a stannic oxide-zirconium oxide composite with colloid particles of a tungsten oxide-stannic oxide-silicon dioxide composite having diameters of 2 to 7 nm and (B) an organosilicon compound, wherein the colloid particles of a stannic oxide-zirconium oxide composite are prepared by using colloid particles of stannic oxide having diameters of 4 to 50 nm which are formed by the reaction of hydrogen peroxide and metallic tin in an aqueous solution of an organic acid selected from oxalic acid or an organic acid having oxalic acid as a main component, preferably in an aqueous solution of oxalic acid, in a manner such that the concentration of stannic oxide is 40% by weight or smaller while the ratio of amounts by mole of hydrogen peroxide to metallic tin $H_2O_2/Sn$ is kept in the range of 2 to 10, preferably in the range of 2 to 4,.

The plastic lens of the present invention is advantageously used for spectacle lenses.

### BACKGROUND ART

Many types of plastic lenses having a hard coat film on a plastic substrate have been known.

As an example of such plastic lenses, a sol of a metal oxide having a great refractive index is used as a component of the hard coating agent applied to the surface of the plastic lens to improve the property of the surface of the plastic lens.

For example, a plastic lens having a hard coat film using a coating composition comprising an organosilicon compound and modified colloid particles of a stannic oxide-zirconium oxide composite having diameters of 4.5 to 60 nm which are formed by coating the surface of nuclei with colloid particles of a tungsten oxide-stannic oxide-silicon dioxide composite having diameters of 2 to 7 nm, a ratio of amounts by weight of $WO_3/SnO_2$ of 0.1 to 100 and a ratio of the amounts by weight of $SiO_2/SnO_2$ of 0.1 to 100 using as the nuclei colloid particles of a stannic oxide-zirconium oxide composite having diameters of 4 to 50 nm and a structure formed by bonding colloid particles of stannic oxide and colloid particles of zirconium oxide to each other in relative amounts such that the ratio of the amounts by weight as the oxides $ZrO_2/SnO_2$ is 0.02 to 1.0, is described in Patent Reference 1. It is described in the Patent Reference 1 that the plastic lens exhibits excellent appearance, weatherability, scratch resistance and moisture resistance and, moreover, these properties show almost no change when a film is formed on the hard coat film in accordance with the vapor deposition process (refer to Patent Reference 1, Claims).

EP 1 041 404 A2 describes a cured film-coated optical element having good scratch resistance, good moisture resistance and good weather resistance, of which the properties are degraded little even when it is further coated with a deposit film of an inorganic oxide. Describes is an optical element having, on an optical substrate, a cured film formed of a coating agent that contains (A) modified stannic oxide-zirconium oxide composite colloid particles as prepared by coating at least a part of the surfaces of stannic oxide-zirconium oxide composite colloid particles with stannic oxide-tungsten oxide-silicon oxide composite colloid particles, and (B) an organosilicon compound.

JP H01 027635 A relates to the problem to prepare a stable high-concentration tin oxide sol with water as the disperse medium by adding hydrogen peroxide solution and metallic tin to an aqueous solution of hydrochloric acid or oxalic acid, while the molar ratio of $H_2O_2/Sn$ is being kept in the range of 2-3, and allowing them to react. As a solution to the problem, the document describes that hydrogen peroxide solution and metallic tin are added to an aqueous solution of hydrochloric acid or oxalic acid, while the molar ratio of $H_2O_2/Sn$ is being kept in the range of 2-3, and reaction is allowed to proceed, thereby preparing an acidic tin oxide sol. Further, to this acidic tin oxide sol is added ammonia or an organic base to neutralize the sol, thereby forming a gel of tin oxide. Thereafter, this gel is separated and washed to obtain a wet cake. This wet cake is then deflocculated with ammonia or an organic base, thereby preparing a tin oxide sol having a pH of 7 or more. It is described as preferable that the first addition be made such that the concentration of tin oxide in the aqueous hydrochloric acid solution is less than 15wt.%.

[Patent Reference 1] Japanese Patent Application Laid-Open No. 2000-281344.

### DISCLOSURE OF THE INVENTION

Heretofore, the test with steel wool has been used as the method for evaluating scratch resistance of a functional film such as a hard coat film and a plastic lens having a hard coat film. However, as the method of evaluation, the Bayer test is recently becoming popular for evaluation of scratch resistance since the scratch resistance is not numerically expressed by the steel wool test.

When the scratch resistance of the plastic lens having a hard coat film obtained by using a hard coating agent comprising a modified sol of a stannic oxide-zirconium oxide, which is described in Japanese Patent Application Laid-Open No. 2000-281344 shown above, is evaluated in accordance with the Bayer test, it is desired that scratch resistance is further improved.

The present invention has been made to overcome the above problem and has an object of providing a plastic lens having a hard coat film exhibiting improved scratch resistance and a great refractive index without adverse effects on various properties such as the property of preventing yellowing under irradiation with ultraviolet light and adhesion.

As the result of intensive studies by the present inventors, it was found that the above problem could be overcome when a hard coat film was formed on a plastic lens by coating a plastic substrate with a coating composition comprising an organosilicon compound and modified colloid particles of a stannic oxide-zirconium oxide composite having a specific particle diameter which were obtained by coating the surface of colloid particles of a stannic oxide-zirconium oxide composite having a specific property used as nuclei with colloid particles of a tungsten oxide-stannic oxide-silicon dioxide composite having a specific property. The present invention has been completed based on the knowledge.

The present invention provides:

(1) A method for producing a plastic lens which comprises forming a hard coat film by coating a plastic substrate with a coating composition comprising:

(A) modified colloid particles of a stannic oxide-zirconium oxide composite having diameters of 4.5 to 60 nm which are formed by coating surface of nuclei with colloid particles of a tungsten oxide-stannic oxide-silicon dioxide composite having diameters of 2 to 7 nm, a ratio of amounts by weight of $WO_3/SnO_2$ of 0.1 to 100 and a ratio of amounts by weight of $SiO_2/SnO_2$ of 0.1 to 100 using as the nuclei colloid particles of a stannic oxide-zirconium oxide composite having diameters of 4 to 50 nm and a structure formed by bonding colloid particles of stannic oxide obtained by reaction of metallic tin, an organic acid selected from oxalic acid or an organic acid having oxalic acid as a main component and hydrogen peroxide and colloid particles of zirconium oxide to each other in amounts such that a ratio of amounts by weight of the oxides of $ZrO_2/SnO_2$ is 0.02 to 1.0, and
(B) an organosilicon compound;

(2) A method for producing a plastic lens described in (1), wherein the modified colloid particles of a stannic oxide-zirconium oxide composite are produced in accordance with a process comprising steps (a) to (f):

step (a): a step comprising forming colloid particles of stannic oxide having diameters of 4 to 50 nm by reacting hydrogen peroxide and metallic tin in an aqueous solution of an organic acid selected from oxalic acid or an organic acid having oxalic acid as a main component in a manner such that a concentration of stannic oxide is 40% by weight or smaller while a ratio of amounts by mole of hydrogen peroxide to metallic tin $H_2O_2/Sn$ is kept in a range of 2 to 4;
step (b): a step comprising mixing an aqueous sol of stannic oxide which comprises colloid particles of stannic oxide having diameters of 4 to 50 nm obtained in step (a) in a concentration of 0.5 to 50% by weight as an oxide $SnO_2$ with an aqueous solution which comprises an oxy zirconium salt in a concentration of 0.5 to 50% by weight as an oxide $ZrO_2$ in relative amounts such that a ratio of amounts by weight as the oxides $ZrO_2/SnO_2$ is 0.02 to 1.0;
step (c): a step comprising forming an aqueous sol of stannic oxide-zirconium oxide composite having particle diameters of 4 to 50 nm by a heat treatment of a mixed fluid obtained in step (b) at 60 to 200°C for 0.1 to 50 hours;
step (d): a step comprising preparing an aqueous solution comprising a tungstate, a stannate a silicate in relative amounts such that a ratio of amounts by weight of $WO_3/SnO_2$ is 0.1 to 100 and a ratio of amounts by weight of $SiO_2/SnO_2$ is 0.1 to 100, and forming a sol of a tungsten oxide-stannic oxide-silicon dioxide composite by removing cations in the prepared aqueous solution;
step (e): a step comprising forming a modified aqueous sol of a stannic oxide-zirconium oxide composite by mixing the aqueous sol of stannic oxide-zirconium oxide composite obtained in step (c) in an amount such that a total of amounts of $ZrO_2$ and $SnO_2$ in the aqueous sol is 100 parts by weight with the sol of a tungsten oxide-stannic oxide-silicon dioxide composite obtained in step (d) having particle diameters of 2 to 7 nm, a ratio of amounts by weight of $WO_3/SnO_2$ of 0.1 to 100 and a ratio of amounts by weight of $SiO_2/SnO_2$ of 0.1 to 100 in an amount such that a total of amounts of $WO_3$, $SnO_2$ and $SiO_2$ in the sol is 2 to 100 parts by weight at 0 to 100°C; and
step (f): a step comprising bringing the modified aqueous sol of a stannic oxide-zirconium oxide composite obtained in step (e) into contact with an anion exchanger to remove anions present in the sol; and

The sol of colloid particles of a stannic oxide-zirconium oxide composite having the surface modified with colloid particles of a tungsten oxide-stannic oxide-silicon dioxide composite, which is a component of the coating composition used in the present invention, has a colloidal color, and the coating film obtained by using the sol exhibits a great refractive index of about 1.8 or greater after being dried. The plastic lens obtained by forming a hard coat film on a plastic substrate using the coating composition comprising the above colloid and the organosilicon compound exhibits excellent appearance in combination with excellent water resistance, moisture resistance, light resistance, antistatic property, heat resistance and abrasion resistance.

In a sol of modified colloid particles of a stannic oxide-zirconium oxide composite obtained in accordance with a conventional process, particles in the sol have a spindle shape, and it is difficult that the particles can stay in a great concentration with stability. In contrast, particles in the modified sol of colloid particles of a stannic oxide-zirconium oxide composite used in the present invention have the spherical shape, and the particles can stay in a great concentration with stability.

For example, a modified sol of colloid particles of a stannic oxide-zirconium oxide composite obtained in accordance with a conventional process has a viscosity of 15 cp. (15 mPa·s) as measured at a concentration of particles of 47.0% by weight using a viscometer of the B type having the No. 1 rotor in a 100 $cm^3$ measuring cylinder at a rotation speed of 60 rpm.

In contrast, the modified sol of colloid particles of a stannic oxide-zirconium oxide composite used for a plastic lens of the present invention has a viscosity of 5.5 cp. (5.5 mPa·s) as measured at a concentration of particles of 47.4% by weight using a viscometer of the B type having the No. 1 rotor in a 100 $cm^3$ measuring cylinder at a rotation speed of 60 rpm.

When a hard coat film is formed from the sol of modified colloid particles of a stannic oxide-zirconium oxide composite in accordance with the present invention, the hard coat film exhibits remarkably improved hardness in comparison with a film formed by using a conventional sol. This is considered to be obtained since packing of the particles in the film is improved due to the spherical shape of the particles unlike the spindle shape of conventional particles.

This sol is stable at a pH in the range of about 1 to 10 and provided with stability sufficient for being supplied as an industrial product.

Since the colloid particles in the sol has the negative charge, compatibility with other sols having colloid particles having the negative charge is excellent. The sol can be mixed with stability with dispersions such as silica sol, antimony pentaoxide sol, anionic and nonionic surfactants, aqueous solutions of polyvinyl alcohol, anionic and nonionic resin emulsions, water glass, aqueous solutions of aluminum phosphate, solutions obtained by hydrolysis of ethyl silicate and solutions obtained by hydrolysis of silane coupling agents such as $\gamma$-glycidoxypropyltrimethoxysilane.

When a hard coat film is formed on a plastic lens using the coating composition comprising the sol having the above properties and the organosilicon compound, the refractive index, chemical resistance, water resistance, moisture resistance, light resistance, weatherability and abrasion resistance of a plastic lens for spectacles can be improved.

## THE MOST PREFERRED EMBODIMENT TO CARRY OUT THE INVENTION

The method for producing a plastic lens of the present invention comprises forming a hard coat film by coating a plastic substrate with a coating composition comprising (A) modified colloid particles of a stannic oxide-zirconium oxide composite having diameters of 4.5 to 60 nm which are formed by coating surface of nuclei with colloid particles of a tungsten oxide-stannic oxide-silicon dioxide composite having diameters of 2 to 7 nm, a ratio of amounts by weight of $WO_3/SnO_2$ of 0.1 to 100 and a ratio of amounts by weight of $SiO_2/SnO_2$ of 0.1 to 100 using as the nuclei colloid particles of a stannic oxide-zirconium oxide composite having diameters of 4 to 50 nm and a structure formed by bonding colloid particles of stannic oxide obtained by reaction of metallic tin, an organic acid selected from oxalic acid or an organic acid having oxalic acid as a main component and hydrogen peroxide and colloid particles of zirconium oxide to each other in amounts such that a ratio of amounts by weight of the oxides of $ZrO_2/SnO_2$ is 0.02 to 1.0, and (B) an organosilicon compound.

The sol of colloid particles of a stannic oxide-zirconium oxide composite as the nuclear particles used for producing the sol of component (A), which is a component of the coating composition used in the present invention, can be produced in accordance with the method comprising steps (a), (b) and (c) described above.

The colloid particles of stannic oxide used in step (a) can be obtained as colloid particles of stannic oxide having diameters of 4 to 50 nm by reacting hydrogen peroxide and metallic tin in an aqueous solution of the organic acid in a manner such that the concentration of stannic oxide is 40% by weight or smaller while the ratio of the amounts by mole of hydrogen peroxide to metallic tin $H_2O_2/Sn$ is kept in a range of 2 to 4.

In the reaction, hydrogen peroxide and metallic tin are added to the aqueous solution of the organic acid while the ratio of the amounts by mole of $H_2O_2/Sn$ is kept in the range of 2 to 4. The entire amounts of hydrogen peroxide and metallic tin may be added into the aqueous solution of the organic acid. However, it is preferable that hydrogen peroxide and metallic tin are added alternately in several portions. It is important that the ratio of the amounts by mole of $H_2O_2/Sn$

is kept in the range of 2 to 4 although the order of addition of hydrogen peroxide and metallic tin is not particularly limited. In general, after portions of hydrogen peroxide and metallic tin are added, the reaction is allowed to be completed, and the next portions of hydrogen peroxide and metallic tin are added thereafter. Each reaction time, although depends on the added amount, is generally 5 to 10 minutes. Then the next portions of hydrogen peroxide and metallic tin are added.

The relative amounts by weight of the organic acid, hydrogen peroxide and metallic tin used in step (a) is, in general, in the following range: the organic acid : hydrogen peroxide : metallic tin = 0.21 to 0.53 : 0.57 to 1.15 : 1.0.

As the aqueous solution of an organic acid, an aqueous solution of oxalic acid or an aqueous solution of organic acids comprising oxalic acid as the main component is used. The reaction can be advantageously conducted when an aqueous solution of oxalic acid alone is used. The aqueous solution of organic acids comprising oxalic acid as the main component means an aqueous solution of organic acids comprising 80% by weight or more of oxalic acid in the entire organic acids, and the rest of the organic acids may comprise organic acids such as formic acid and acetic acid. The aqueous solution of an organic acid can be used in a concentration preferably in the range of 1 to 30% by weight and more preferably in the range of 4 to 10% by weight.

The medium in the sol of stannic oxide may be any of water, a hydrophilic organic solvent and a mixture thereof. An aqueous sol using water as the medium is preferable. As pH of the sol, a pH stabilizing the sol is preferable. In general, a pH of about 0.2 to 11 is preferable. The sol of stannic oxide may comprise any desired components such as alkaline substances, acidic substances and oxycarboxylic acids for stabilizing the sol as long as the object of the present invention can be achieved. Although the sol of stannic oxide has a concentration of about 0.5 to 50% by weight as stannic oxide, a smaller concentration is preferable. It is preferable that the concentration is 1 to 30% by weight.

The sol of a stannic oxide-zirconium oxide composite can be obtained in accordance with step (b) in which the above sol of stannic oxide is mixed with an oxy zirconium salt in such amounts that the ratio of the amounts by weight of $ZrO_2/SnO_2$ is 0.02 to 1.0, in general, at 0 to 100°C for about 0.5 to 3 hours and step (c) in which the obtained mixture is treated by heating at 60 to 200°C for 0.1 to 50 hours.

Examples of the oxy zirconium salt used above include zirconium oxychloride, zirconium oxynitrate, zirconium oxysulfate, oxy zirconium salts of organic acids such as zirconium oxyacetate and zirconium oxycarbonate. The oxy zirconium salts may be used in the form of a solid or as an aqueous solution. It is preferable that the oxy zirconium salt is used as an aqueous solution having a concentration of about 0.5 to 50% by weight as $ZrO_2$. Salts insoluble in water such as zirconium oxycarbonate can be used when stannic oxide used for the mixing is an acidic sol.

As stannic oxide, it is preferable that an alkaline sol stabilized with an organic base such as an amine is used. It is preferable that the mixing with the oxy zirconium salt is conducted at a temperature, in general, in the range of 0 to 100°C and preferably in the range of the room temperature to about 60°C. While the mixing is conducted, oxy zirconium salt may be added to a sol of stannic oxide, or a sol of stannic oxide may be added to the aqueous solution of oxy zirconium salt. The latter method is more preferable. It is necessary the mixing be achieved sufficiently. The time of the mixing is preferably about 0.5 to 3 hours.

In the present invention, the diameter of the colloid particles of a $WO_3$-$SnO_2$-$SiO_2$ composite comprised in the sol of a tungsten oxide-stannic oxide-silicon dioxide composite obtained in step (d), which is used as the coating sol, can be measured by observation by an electron microscope. The diameter is 2 to 7 nm and preferably 2 to 5 nm. As the disperse medium of the colloid particles in the sol, any of water, hydrophilic organic solvents and mixtures thereof can be used. The sol comprises $WO_3$, $SnO_2$ and $SiO_2$ in amounts such that the ratio of the amounts by weight of $WO_3/SnO_2$ is 0.1 to 100 and the ratio of the amounts by weight of $SiO_2/SnO_2$ is 0.1 to 100. The total of the concentrations of $WO_3$, $SnO_2$ and $SiO_2$ is, in general, 40% by weight or smaller and practically 2% by weight or greater and preferably in the range of 5 to 30% by weight. The sol exhibits a pH of about 1 to 9 and is a colorless transparent fluid or a fluid having a slightly colloidal color. The sol is stable for 3 months or longer at the room temperature and for one month or longer at 60°C. No precipitates are formed in the sol. Increase in the viscosity of the sol or formation of gel in the sol does not take place.

The stable sol of a tungsten oxide-stannic oxide-silicon dioxide composite comprising colloid particles of a composite of tungsten oxide ($WO_3$), stannic oxide ($SnO_2$) and silicon dioxide ($SiO_2$), which is obtained in step (d), can be prepared, for example, in accordance with the steps of:

Step (d-1): a step in which an aqueous solution comprising a tungstate, a stannate and a silicate in amounts such that the ratio of the amounts by weight of $WO_3/SnO_2$ is 0.1 to 100 and the amounts by weight $SiO_2/SnO_2$ is 0.1 to 100 is prepared; and

Step (d-2): a step in which cations present in the aqueous solution obtained in step (d-1) are removed.

Examples of the tungstate, stannate and silicate used in step (d-1) include tungstates, stannates and silicates of alkali metals, ammonium and amines. Examples of the preferable alkali metal, ammonium and amine include Li, Na, K, Rb, Cs; $NH_4^+$; alkylamines such as ethylamine, triethylamine, isopropylamine, n-propylamine, isobutylamine, diisobutylamine and di(2-ethylhexyl)amine; aralkylamines such as benzylamine; alicyclic amines such as piperidine; and

alkanolamines such as monoethanolamine and triethanolamine. Among the above salts, sodium tungstate ($Na_2WO_4 \cdot 2H_2O$), sodium stannate ($Na_2SnO_3 \cdot 3H_2O$) and sodium silicate (water glass) are preferable. Solutions prepared by dissolving tungsten oxide, tungstic acid, stannic acid and silicic acid into an aqueous solution of an alkali metal hydroxide can be also used. As the silicate, amine silicates and quaternary ammonium silicates obtained by adding an alkylamine such as ethylamine, triethylamine, isopropylamine, n-propylamine, isobutylamine, diisobutylamine and di(2-ethylhexyl)amine to active silicic acid may be used.

Examples of the method for preparing the aqueous solution in step (d-1) include the method in which a tungstate, a stannate and silicate in the form of powder are dissolved into water to prepare an aqueous solution, the method in which an aqueous solution of a tungstate, an aqueous solution of a stannate and an aqueous solution of silicate are mixed to prepare an aqueous solution and the method in which a tungstate and a stannate in the form of powder and an aqueous solution of silicate are added to water to prepare an aqueous solution.

It is preferable that the aqueous solution of the tungstate used for preparation of the sol in step (d) has a concentration of 0.1 to 15% by weight as $WO_3$. However, a concentration exceeding the above range may also be used.

It is preferable that the aqueous solution of the stannate used for preparation of the sol in step (d) has a concentration of about 0.1 to 30% by weight as $SnO_2$. However, a concentration exceeding the above range may also be used.

It is preferable that the aqueous solution of the silicate used for preparation of the sol in step (d) has a concentration of about 0.1 to 30% by weight as $SiO_2$. However, a concentration exceeding the above range may also be used.

It is preferable that the preparation of the aqueous solution in step (d-1) is conducted at a temperature in the range of about the room temperature to 100°C and more preferably in the range of about the room temperature to 60°C under stirring. The aqueous solutions used for the mixing are used in amounts such that the ratio of the amounts by weight of $WO_3/SnO_2$ is 0.1 to 100 and the ratio of the amounts by weight of $SiO_2/SnO_2$ is 0.1 to 100.

In step (d-2), cations present in the aqueous solution obtained in step (d-1) are removed. As the method for removing cations, the method of bringing the solution into contact with an ion exchanger of the hydrogen type or the method of salting out can be used. As the ion exchanger used above, a conventional ion exchanger such as a commercial cation exchange resin of the hydrogen type can be used.

When the concentration of the sol is small, where desired, the aqueous sol obtained via steps (d-1) and (d-2) may be treated for increasing the concentration in accordance with a conventional method of concentration such as the vaporization method and the ultrafiltration method. In particular, the ultrafiltration method is preferable. In the concentration, it is preferable that the temperature of the sol is kept at about 100°C or lower and more preferably 60°C or lower.

A sol in a hydrophilic organic solvent, which is called an organosol, is obtained by replacing water in the aqueous sol obtained in step (d) with a hydrophilic organic solvent.

The sol of a tungsten oxide-stannic oxide-silicon dioxide composite obtained in step (d) comprises particles of a composite comprising tungsten oxide, stannic oxide and silicon dioxide in which stannic oxide, tungsten oxide and silicon dioxide form a composite uniform at the atomic level (a solid solution). Therefore, the above sol cannot be obtained by simply mixing three types of sols which are a sol of tungsten oxide, a sol of stannic oxide and a sol of silicon dioxide.

Since particles of the tungsten oxide-stannic oxide-silicon dioxide composite form a solid solution in the sol of a tungsten oxide-stannic oxide-silicon dioxide composite, even if the solvent is replaced, the sol is not decomposed into particles of tungsten oxide, particles of stannic oxide and particles of silicon dioxide.

The sol of a tungsten oxide-stannic oxide-silicon dioxide composite provides improved water resistance, moisture resistance and weatherability in comparison with a sol of a tungsten oxide-stannic oxide composite when the sol is applied to a substrate and a coating film is formed.

The ratio of the amounts by weight of $WO_3/SnO_2$ in the sol obtained in step (d) is 0.1 to 100 as described above. When the ratio of the amounts by weight is smaller than 0.1, the sol is unstable. When the ratio of the amounts by weight exceeds 100, the sol is also unstable. An oxycarboxylic acid which is added in the preparation of the above organosol from an aqueous sol having a great pH value contributes to the stability of the sol. It is preferable that the amount of addition of the oxycarboxylic acid is less than 30% by weight based on the total of the amounts of $WO_3$, $SnO_2$ and $SiO_2$ in the sol. Addition of 30% or greater amount by weight may result in the reduced water resistance of the dried coating film obtained by using the sol. Examples of the oxycarboxylic acid include lactic acid, tartaric acid, citric acid, gluconic acid, malic acid and glycol. Examples of the alkali component include hydroxides of alkali metals such as Li, Na, K, Rb and Cs; $NH_4^+$; alkylamines such as ethylamine, triethylamine, isopropylamine and n-propylamine; aralkylamines such as benzylamine; alicyclic amines such as piperidine; and alkanolamines such as monoethanolamine and triethanolamine. The alkali component may be used in combination of two or more and may be used in combination with the above acidic component. pH of the sol changes depending on the amount of the alkali metal, ammonium, the amine or the oxycarboxylic acid in the sol. When pH is smaller than 1, the sol is unstable. When pH exceeds 9, the colloid particles of a tungsten oxide-stannic oxide-silicon dioxide composite tend to be dissolved into the fluid. When the total of the amounts of $WO_3$, $SnO_2$ and $SiO_2$ in the sol exceeds 40% by weight, the sol is unstable. When the concentration is excessively small, the condition is not practical. The concentration preferable as the industrial product is in the range of 5 to 30% by weight.

When the ultrafiltration is used as the method for the concentration, polyanions and very small particles present in the sol pass through the membrane of ultrafiltration together with water, and the polyanions and very small particles which cause instability of the sol can be removed.

In step (e), the aqueous sol of a stannic oxide-zirconium oxide composite obtained in step (c) in an amount of 100 parts by weight as the total of the amounts of $ZrO_2$ and $SnO_2$ in the aqueous sol is mixed with the sol of a tungsten oxide-stannic oxide-silicon dioxide composite having a particle diameter of 2 to 7 nm, a ratio of the amounts by weight of $WO_3/SnO_2$ of 0.1 to 100 and a ratio of the amounts by weight of $SiO_2/SnO_2$ of 0.1 to 100 in an amount of 2 to 100 parts by weight as the total of the amounts of $WO_3$, $SnO_2$ and $SiO_2$ in the sol at 0 to 100°C.

In step (e), by bonding the colloidal particles of a tungsten oxide-stannic oxide-silicon dioxide composite to the surface of the colloid particles of a stannic oxide-zirconium oxide composite so that the surface of the colloid particles of a stannic oxide-zirconium oxide composite is covered with the colloidal particles of a tungsten oxide-stannic oxide-silicon dioxide composite, colloid particles of a stannic oxide-zirconium oxide composite modified in a manner such that the colloid particles of a stannic oxide-zirconium oxide composite are present as the nuclei and the surface of the particles is provided with the property of the tungsten oxide-stannic oxide-silicon dioxide composite, are formed. The modified colloid particles of a stannic oxide-zirconium oxide composite can be obtained as a sol dispersed in a liquid medium with stability.

In step (e), the sol having the colloid particles of the composite dispersed in a liquid medium can be obtained by mixing together the sol of a tungsten oxide-stannic oxide-silicon dioxide composite prepared in step (d) and the aqueous sol of a stannic oxide-zirconium oxide composite prepared in step (c), followed by adding active silicic acid stabilized with an amine and stirring for 1 to 3 hours. The active silicic acid stabilized with an amine can be obtained, for example, by cation exchange of sodium silicate, followed by addition of an amine, examples of which include alkylamines such as ethylamine, triethylamine, isopropylamine, n-propylamine and diisobutylamine; aralkylamines such as benzylamine; alicyclic amines such as piperidine; and alkanolamines such as monoethanolamine and triethanolamine. Among the above amines, alkylamines such as diisobutylamine are preferable.

The sol of particles of a stannic oxide-zirconium oxide composite modified with the colloid particles of a tungsten oxide-stannic oxide-silicon dioxide composite can be obtained in accordance with step (e) in which the sol of the stannic oxide-zirconium oxide composite in an amount of 100 parts by weight as the oxides ($ZrO_2+SnO_2$) with the sol of the tungsten oxide-stannic oxide-silicon dioxide composite described above in an amount such that the total of the amounts of $WO_3$, $SnO_2$ and $SiO_2$ in the sol is 2 to 100 parts by weight preferably under strong stirring, and then step (f) in which anions in the mixed sol are removed from the sol.

The modified colloid particles of a stannic oxide-zirconium oxide composite in the sol obtained by mixing in step (e) can be observed by an electron microscope and have diameters of about 4.5 to 60 nm. The sol obtained by the above mixing has a pH of about 1 to 9. Since anions such as $Cl^-$, $NO_2^-$ and $CH_3COO^-$ derived from the oxy zirconium salt used for the modification are contained in great amounts, micro-flocculation of the colloid particles takes place, and the transparency of the sol is decreased.

The transparent and stable sol of the modified colloid particles of a stannic oxide-zirconium oxide composite can be obtained by removing anions in step (f), from the sol obtained by the above-mentioned mixing.

The removal of anions in step (f) can be achieved by treating the sol obtained by the mixing with an anion exchange resin of the hydroxyl group type, in general, at a temperature of 100°C or lower and preferably in the range of about the room temperature to 60°C. As the anion exchange resin of the hydroxyl group type, a commercial product may be used. An anion exchange resin of the strong base type such as AMBERLITE IRA-410 is preferable.

It is preferable that the treatment with the anion exchange resin of the hydroxyl group type in step (f) is conducted under the condition such that the concentration of the metal oxides in the sol obtained by mixing in step (e) is 1 to 10% by weight.

When a further increase in the concentration of the modified stannic oxide-zirconium oxide composite in the sol obtained in steps (a) to (f) is desired, the concentration can be increased in accordance with a conventional method such as distillation and ultrafiltration. The maximum concentration is about 50% by weight. When the adjustment of pH of the sol is desired, the adjustment can be conducted by adding hydroxide of the alkali metal, ammonium hydroxide, the amine or the oxycarboxylic acid described above to the sol after the concentration. In particular, a sol having the total of the concentrations of the above metal oxides ($ZrO_2+SnO_2$) + ($WO_3+SnO_2+SiO_2$) of 10 to 50% by weight is preferable from the standpoint of the practical application.

The entire surface or a portion of the surface of the colloid particles in the sol of the modified stannic oxide-zirconium oxide composite obtained in step (f) can be coated with a silane compound such as ethyl silicate, methyltrimethoxysilane and $\gamma$-glycidoxypropyl- trimethoxysilane or a hydrolysis product of the silane compound.

When the sol of the modified stannic oxide-zirconium oxide composite obtained by the above mixing is an aqueous sol, an organosol can be obtained by replacing the water medium in the aqueous sol with a hydrophilic organic solvent. The replacement can be conducted in accordance with a conventional method such as the method of replacement by distillation and the ultrafiltration. Examples of the hydrophilic organic solvent include lower alcohols such as methyl

alcohol, ethyl alcohol and isopropyl alcohol; linear chain amines such as dimethylformamide and N,N'-dimethylacetamide; cyclic amides such as N-methyl-2-pyrrolidone; and glycols such as ethylcellosolve, propylene glycol monomethyl ether and ethylene glycol.

The replacement of water with the hydrophilic organic solvent can be conducted easily in accordance with a conventional method such as the method of replacement by distillation and the ultrafiltration method.

The modified colloid particles of the stannic oxide-zirconium oxide composite having the surface covered with the colloid particles of the tungsten oxide-stannic oxide-silicon dioxide composite in accordance with the present invention have the negative charge in the sol. The colloid particles of the stannic oxide-zirconium oxide composite have the positive charge, and the colloid particles of the tungsten oxide-stannic oxide-silicon dioxide composite have the negative charge. Therefore, the colloid particles of the tungsten oxide-stannic oxide-silicon dioxide composite having the negative charge are electrically attracted to the vicinity of the colloid particles of the stannic oxide-zirconium oxide composite having the positive charge in the mixing in step (e). The colloid particles of the tungsten oxide-stannic oxide-silicon dioxide composite are bonded to the surface of the colloid particles having the positive charge through the chemical bond. The particles having the positive charge work as the nuclei, and the surface of the nuclei is entirely covered with the colloid particles of the tungsten oxide-stannic oxide-silicon dioxide composite. Thus, the modified colloid particles of the stannic oxide-zirconium oxide composite are formed. The mechanism can be considered as described above.

When the colloid particles of the stannic oxide-zirconium oxide composite having diameters of 4 to 50 nm as the nuclear sol and the colloid particles of the tungsten oxide-stannic oxide-silicon dioxide composite as the coating sol are mixed together, it is difficult that a stable sol is obtained when the total of the amounts of metal oxides of ($WO_3$+$SnO_2$+$SiO_2$) in the coating sol is less than 2 parts by weight per 100 parts by weight of the metal oxides ($ZrO_2$ and $SnO_2$) as the nuclear sol. The reason is considered as follows. When the amount of the colloid particles of the tungsten oxide-stannic oxide-silicon dioxide composite is insufficient, coverage of the surface of the colloid particles of the stannic oxide-zirconium oxide composite as the nuclei with the colloid particles of the composite in the coating sol becomes insufficient, and flocculation of the formed colloid particles tends to take place, to cause instability of the formed sol. Therefore, the amount of the colloid particles of the tungsten oxide-stannic oxide-silicon dioxide composite used for the mixing is at least the minimum amount necessary for forming the stable sol of the modified colloid particles of the stannic oxide-zirconium oxide composite although the amount may be less than the amount necessary for covering the entire surface of the colloid particles of the stannic oxide-zirconium oxide composite. When the colloid particles of the tungsten oxide-stannic oxide-silicon dioxide composite is used for the mixing in an amount exceeding the amount used for covering the surface, the obtained sol is simply a stable mixture comprising the sol of the colloid particle of the tungsten oxide-stannic oxide-silicon dioxide composite and the sol of the modified colloid particles of the stannic oxide-zirconium oxide composite formed by the mixing.

For the modification of the colloid particles of the stannic oxide-zirconium oxide composite by the coating of the surface, it is preferable that the amount of the colloid particles of the tungsten oxide-stannic oxide-silicon dioxide composite in the coating sol is 100 parts by weight or less expressed as the total of the amounts of the oxides ($WO_3$+$SnO_2$+$SiO_2$) per 100 parts by weight of the metal oxides ($ZrO_2$ and $SnO_2$) in the nuclear sol.

The preferable aqueous sol of the modified stannic oxide-zirconium oxide composite used in the present invention has a pH of about 3 to 11. When the pH is smaller than 3, the formed sol tends to be unstable. When the pH exceeds 11, the tungsten oxide-stannic oxide-silicon dioxide composite coating the modified colloid particles of the stannic oxide-zirconium oxide composite tends to be dissolved into the fluid. When the total of the amounts of the metals of ($ZrO_2$+$SnO_2$) + ($WO_3$+$SnO_2$+$SiO_2$) in the sol of the modified colloid particles of the stannic oxide-zirconium oxide composite exceeds 60% by weight, the formed sol tends to be unstable. As the industrial product, a concentration of about 10 to 50% by weight is preferable.

Since the colloid particles of the tungsten oxide-stannic oxide-silicon dioxide composite tend to be hydrolyzed at high temperatures, it is preferable that the temperature is 100°C or lower in the mixing in step (e), in the anion exchange in step (f) and in the increase in the concentration, the adjustment of pH and the replacement of the solvents after step (f).

In the coating composition used in the present invention, an organosilicon compound is used as component (B). As the organosilicon compound, for example, at least one compound selected from compounds represented by general formula (I):

$$R^1{}_nSi(OR^2)_{4-n} \cdots \qquad (I)$$

wherein $R^1$ represents a monovalent hydrocarbon group having 1 to 20 carbon atoms which has or does not have functional groups, $R^2$ represents an alkyl group having 1 to 8 carbon atoms, aryl group having 6 to 10 carbon atoms, an aralkyl group having 7 to 10 carbon atoms or an acyl group having 2 to 10 carbon atoms, n represents 0, 1 or 2, a plurality of groups represented by $R^1$ may be the same with or different from each other when a plurality of $R^1$ are present, and a plurality of groups represented by $OR^2$ may be the same with or different from each other when a plurality of $OR^2$ are present;

compounds represented by general formula (II):

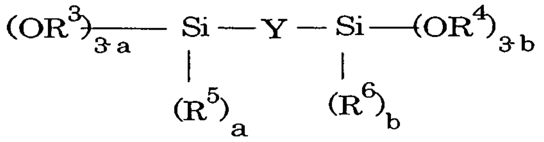

... (II)

wherein $R^3$ and $R^4$ each represent an alkyl group having 1 to 4 carbon atoms or an acyl group having 2 to 4 carbon atoms, the groups represented by $R^3$ and $R^4$ may be the same with or different from each other, $R^5$ and $R^6$ each represent a monovalent hydrocarbon group having 1 to 5 carbon atoms having or not having functional groups, the groups represented by $R^5$ and $R^6$ may be the same with or different from each other, Y represents a divalent hydrocarbon group having 2 to 20 carbon atoms, a and b each represent 0 or 1, a plurality of groups represented by $OR^3$ may be the same with or different from each other, and a plurality of groups represented by $OR^4$ may be the same with or different from each other;

and hydrolysis products thereof, is used.

Among the groups represented by $R^1$ in general formula (I) shown above, examples of the monovalent hydrocarbon group having 1 to 20 carbon atoms include linear, branched and cyclic alkyl groups having 1 to 20 carbon atoms, linear, branched and cyclic alkenyl groups having 2 to 20 carbon atoms, aryl groups having 6 to 20 carbon atoms and aralkyl groups having 7 to 20 carbon atoms. As the alkyl group having 1 to 20 carbon atoms, alkyl groups having 1 to 10 carbon atoms are preferable. Examples of the alkyl group include methyl group, ethyl group, n-propyl group, isopropyl group, n-butyl group, isobutyl group, sec-butyl group, tert-butyl group, pentyl group, hexyl group, octyl group, cyclopentyl group and cyclohexyl group. As the alkenyl group having 2 to 20 carbon atoms, alkenyl groups having 2 to 10 carbon atoms are preferable. Examples of the alkenyl group include vinyl group, allyl group, butenyl group, hexenyl group and octenyl group. As the aryl group having 6 to 20 carbon atoms, aryl groups having 6 to 10 carbon atoms are preferable. Examples of the aryl group include phenyl group, tolyl group, xylyl group and naphthyl group. As the aralkyl group having 7 to 20 carbon atoms, aralkyl groups having 7 to 10 carbon atoms are preferable. Examples of the aralkyl group include benzyl group, phenetyl group, phenylpropyl group and naphthylmethyl group.

Functional groups may be introduced into the hydrocarbon group. Examples of the functional group include halogen atoms, glycidoxy group, epoxy group, amino group, mercapto group, cyano group and (meth)acryloyloxy group. As the hydrocarbon group having the functional group, alkyl groups having the functional group and 1 to 10 carbon atoms are preferable. Examples of the alkyl group having the functional group include γ-chloropropyl group, 3,3,3-trichloropropyl group, chloromethyl group, glycidoxymethyl group, α-glycidoxyethyl group, β-glycidoxyethyl group, α-glycidoxypropyl group, β-glycidoxypropyl group, γ-glycidoxypropyl group, α-glycidoxybutyl group, β-glycidoxybutyl group, γ-glycidoxybutyl group, δ-glycidoxybutyl group, (3,4-epoxycyclohexyl)-methyl group, β-(3,4-epoxycyclohexyl)ethyl group, γ-(3,4-epoxycyclohexyl)-propyl group, δ-(3,4-epoxycyclohexyl)butyl group, N-(β-aminoethyl)-γ-aminopropyl group, γ-aminopropyl group, γ-mercaptopropyl group, β-cyanoethyl group, γ-methacryloyloxypropyl group and γ-acryloyloxy-propyl group.

The alkyl group having 1 to 8 carbon atoms represented by $R^2$ may be a linear, branched or cyclic alkyl group. Examples of the alkyl group include methyl group, ethyl group, n-propyl group, isopropyl group, n-butyl group, isobutyl group, sec-butyl group, tert-butyl group, pentyl group, hexyl group, cyclopentyl group and cyclohexyl group. Examples of the aryl group include phenyl group and tolyl group. Examples of the aralkyl group include benzyl group and phenetyl group. Examples of the acyl group include acetyl group.

n represents 0, 1 or 2. When a plurality of $R^1$ are present, a plurality of groups represented by $R^1$ may be the same with or different from each other. When a plurality of $OR^2$ are present, a plurality of groups represented by $OR^2$ may be the same with or different from each other.

Examples of the compound represented by general formula (I) include methyl silicate, ethyl silicate, n-propyl silicate, isopropyl silicate, n-butyl silicate, sec-butyl silicate, tert-butyl silicate, tetraacetoxysilane, methyltrimethoxysilane, methyltripropoxysilane, methyltriacetoxysilane, methyltributoxysilane, methyltriamyloxysilane, methyltriphenoxysilane, methyltribenzyloxysilane, methytriphenetyloxysilane, glycidoxymethyl-trimethoxysilane, glycidoxymethyltriethoxysilane, α-glycidoxyethyltrimethoxysilane, α-glycidoxyethyltriethoxysilane, β-glycidoxyethyltriethoxysilane, α-glycidoxypropyltrimethoxysilane, α-glycidoxypropyltriethoxysilane, β-glycidoxypropyltrimethoxysilane, β-glycidoxypropyltriethoxysilane, γ-glycidoxypropyltrimethoxysilane, γ-glycidoxypropyltriethoxysilane, γ-glycidoxypropyltripropoxysilane, γ-glycidoxypropyltriphenoxylsilane, α-glycidoxybutyltrimethoxysilane, α-glycidoxybutyltriethoxysilane, β-glycidoxybutyltrimethoxysilane, β-glycidoxybutyltriethoxysilane, γ-glycidoxybutyltrimethoxysilane, γ-glycidoxybutyltriethoxysilane, δ-glycidoxybutyltrimethoxysilane, δ-glycidoxybutyltriethoxysilane, (3,4-epoxycyclohexyl)methyltrimethoxysilane, (3,4-epoxycyclohexyl)methyltriethoxysilane, β-(3,4-epoxycyclohexyl)ethyltrimethoxysilane, β-(3,4-epoxycyclohexyl)ethyltriethoxysilane, β-(3,4-epoxycyclohexyl)ethyltripropoxysilane, β-(3,4-epoxycyclohexyl)ethyltributoxysilane, β-(3,4-epoxycyclohexyl)ethyltriphenoxy-silane, γ-(3,4-epoxycyclohexyl)propyltriemthoxysilane, γ-(3,4-epoxycyclohexyl)propyltriethoxysilane, δ-(3,4-epoxycyclohexyl)butyltrimethoxy-silane, δ-(3,4-epoxycyclohexyl)butyltriethoxysilane, glycidoxymethylmethyldimethoxysilane, glycidoxymethylmethyldiethoxysilane, α-glycidoxyethylmethyldimethoxysilane, α-glycidoxyethylmethyldiethoxy-silane, β-glycidoxyethylmethyldimethoxysilane, β-glycidoxyethyl-methyldiethoxysilane, α-glycidoxypropylmethyldimethoxysilane, α-glycidoxypropylmethyldiethoxysilane, β-glycidoxypropylmethyldimethoxysilane, α-glycidoxypropylmethyldiethoxysilane, γ-glycidoxypropylmethyldimethoxysilane, γ-glycidoxypropylmethyldiethoxysilane, γ-glycidoxypropylmethyldipropoxysilane, γ-glycidoxypropylmethoxysilane, γ-glycidoxypropylmethyldiphenoxysilane, γ-glycidoxypropylethyl-dimethoxysilane, γ-glycidoxypropylethyldiethoxysilane, γ-glycidoxy-propylvinyldimethoxysilane, γ-glycidoxypropylvinyldiethoxysilane, γ-glycidoxypropylphenyldimethoxysilane, γ-glycidoxypropylphenyl-diethoxysilane, ethyltrimethoxysilane, ethyltriethoxysilane, vinyltrimethoxysilane, vinyltriacetoxysilane, vinyltriethoxysilane, phenyltrimethoxysilane, phenyltriethoxysilane, phenyltriacetoxysilane, γ-chloropropyltrimethoxysilane, γ-chloropropyltriacetoxysilane, 3,3,3-trifluoropropyltrimethoxysilane, γ-methacryloyloxypropyltrimethoxysilane, γ-mercaptopropyltrimethoxysilane, γ-mercaptopropyltriethoxysilane, β-cyanoethyltriethoxysilane, chloromethyltrimethoxysilane, chloromethyl-triethoxysilane, N-(β-aminoethyl)-γ-aminopropyltrimethoxysilane, N-(β-aminoethyl)-γ-aminopropylmethyldimethoxysilane, γ-aminopropylmethyldimethoxysilane, N-(β-aminoethyl)-γ-aminopropylmethyldimethoxysilane, N-(β-aminoethyl)-γ-aminopropylmethyldiethoxysilane, dimethyldimethoxysilane, phenylmethyldimethoxysilane, dimethyldiethoxysilane, phenylmethyldiethoxysilane, γ-chloropropylmethyldimethoxysilane, γ-chloropropylmethyldiethoxysilane, dimethyldiacetoxysilane, γ-methacryloyloxypropylmethyldimethoxysilane, γ-methacryloyl-oxypropylmethyldiethoxysliane, γ-mercaptopropylmethyldimethoxysilane, γ-mercaptopropylmethyldiethoxysilane, methylvinyldimethoxysilane and methylvinyldiethoxysilane.

Examples of the alkyl group having 1 to 4 carbon atoms which is represented by $R^3$ and $R^4$ in general formula (II) include methyl group, ethyl group, n-propyl group, isopropyl group, n-butyl group, isobutyl group, sec-butyl group and tert-butyl group. As the acyl group having 2 to 4 carbon atoms, acetyl group is preferable. The groups represented by $R^3$ and $R^4$ may be the same with or different from each other. Examples of the monovalent hydrocarbon group having 1 to 5 carbon atoms which is represented by $R^5$ and $R^6$ include alkyl groups having 1 to 5 carbon atoms and alkenyl groups having 2 to 5 carbon atoms. The alkyl group and the alkenyl group may be linear or branched. Examples of the alkyl group include methyl group, ethyl group, n-propyl group, isopropyl group, n-butyl group, sec-butyl group, tert-butyl group and pentyl group. Examples of the alkenyl group include vinyl group, allyl group and butenyl group.

Functional groups may be introduced into the hydrocarbon group. Examples of the functional group and the hydrocarbon group having the functional group include those groups mentioned while describing $R^1$ in general formula (I). The groups represented by $R^5$ and $R^6$ may be the same with or different from each other. As the divalent hydrocarbon group having 2 to 20 carbon atoms which is represented by Y, alkylene groups and alkylidene groups having 2 to 10 carbon atoms are preferable. Examples include methylene group, ethylene group, propylene group, butylene group, ethylidene group and propylidene group.

a and b each represent 0 or 1. A plurality of groups represented by $OR^3$ may be the same with or different from each other, and a plurality of groups represented by $OR^4$ may be the same with or different from each other.

Examples of the compound represented by general formula (II) include methylenebis(methyldimethoxysilane), ethylenebis(ethyl-dimethoxysilane), propylenebis(ethyldiethoxysilane) and butylenebis-(methyldiethoxysilane).

In the coating composition used in the present invention, a single compound or a combination of two or more compounds suitably selected from the compounds represented by general formula (I), the compounds represented by general formula (II) and hydrolysis products thereof can be used as the organosilicon compound of component (B). The hydrolysis product can be prepared by adding a basic aqueous solution such as an aqueous solution of sodium hydroxide and an aqueous solution of ammonia or an acidic aqueous solution such as an aqueous solution of acetic acid and an aqueous solution of citric acid to the organosilicon compound represented by general formula (I) or general formula (II) and stirring the resultant solution.

As for the relative amounts of the modified colloid particles of a stannic oxide-zirconium oxide composite of component (A) and the organosilicon compound of component (B) in the coating composition used in the present invention, it is preferable from the standpoint of the refractive index and the excellent transparency that component (A) is contained in an amount of 1 to 500 parts by weight, more preferably 20 to 250 parts by weight, and most preferably 50 to 200 parts by weight as the solid components per 100 parts by weight of component (B).

The plastic substrate used in the present invention is not particularly limited. Examples of the material used for the substrate include plastic substrates such as the homopolymer of methyl methacrylate, copolymers obtained from methyl methacrylate and one or more types of other monomers as the monomer components, the homopolymer of diethylene glycol bisallylcarbonate, copolymers of diethylene glycol bisallylcarbonate and one or more types of other monomers as the monomer components, copolymers having sulfur atoms, copolymers having halogen atoms, polycarbonates, polystyrene, polyvinyl chloride, unsaturated polyesters, polyethylene terephthalate, polyurethanes and polythiourethanes. When the excellent appearance is considered (i.e., the absence of interference fringes due to the difference of the refractive index between the coating film and the lens substrate), plastic lenses having a refractive index of 1.55

to 1.62 are preferable.

Where desired, the coating composition used in the present invention may further comprise hardening agents in order to accelerate the reaction, fine particles of metal oxides in order to adjust the refractive indices of the coating composition and the lens comprising various types of substrates, and various types of organic solvents and surfactants in order to improve the wetting property during the coating and the smoothness of the hard coat film. Ultraviolet light absorbents, antioxidants and light stabilizers may be added as long as the physical properties of the hard coat film are not affected.

Examples of the hardening agent include amines such as allylamine and ethylamine and various acids and bases including Lewis acids and Lewis bases. Examples of the acid and the base include organic carboxylic acids, chromic acid, hypochlorous acid, boric acid, perchloric acid, hydrobromic acid, selenious acid, thiosulfuric acid, orthosilicic acid, thiocyanic acid, nitrous acid, aluminic acid, carbonic acid, salts and metal salts of these acids and metal alkoxides and metal chelate compounds having aluminum, zirconium and titanium. From the standpoint of the scratch resistance, metal salts of acetylacetone are preferable as the hardening agent. Examples of the metal salt of acetylacetone used as component (C) include metal complex compounds represented by $M^1(CH_3COCHCOCH_3)_{n1}(OR^6)_{n2}$, wherein $M^1$ represents Zn(II), Ti(IV), Co(II), Fe(II), Cr(III), Mn(II), V(III), V(IV), Ca(II), Co(III), Cu(II), Mg(II) or Ni(II); $R^6$ represents a hydrocarbon group having 1 to 8 carbon atoms; n1+n2 represents a number corresponding to the valence of the metal represented by $M^1$ which is 2, 3, or 4; and n2 represents 0, 1 or 2. Examples of the group represented by $R^6$ include the hydrocarbon groups having 1 to 8 carbon atoms among the groups described as the examples of the hydrocarbon groups having 1 to 10 carbon atoms in general formula (I).

Examples of the fine particles of a metal oxide include conventional fine particles of metal oxides such as fine particles of aluminum oxide, titanium oxide, antimony oxide, zirconium oxide, silicon oxide, cerium oxide and iron oxide.

The hardening of the coating composition is conducted, in general, by drying with the heated air or by irradiation with an active energy radiation. As for the condition of the hardening, it is preferable that the hardening is conducted in the air heated at 70 to 200°C and more preferably at 90 to 150°C. As the active energy radiation, far infrared light can be used, and damages due to the heat can be suppressed.

Examples of the method for forming the hard coat film on the substrate using the coating composition of the present invention include methods of applying the above coating composition to the substrate to form a coating layer. As the means for the application, a conventional method such as the dipping method, the spin coating method and the spray coating method can be used. From the standpoint of the accuracy of the surface, the dipping method and the spin coating method are preferable.

Adhesion between the substrate and the hard coat film can be improved by subjecting the substrate to a surface treatment before the coating composition is applied to the substrate. Examples of the surface treatment include chemical treatments such as the treatment with an acid, an alkali or various types of organic solvents; physical treatments such as the treatment with plasma or ultraviolet light; treatments with cleaning agents using various types of cleaning agents; the sand blast treatment; and the primer treatment using various types of resins.

An antireflection film may be formed on the hard coat film using an inorganic compound or an organic compound as the material in accordance with a physical vapor deposition method such as the vacuum vapor deposition method and the sputtering method after the coating composition is applied to the substrate and the hard coat film is formed.

The plastic lens of the present invention can be used for spectacle lenses and lenses for cameras.

## EXAMPLES

The present invention will be described more specifically with reference to examples in the following. However, the present invention is not limited to the examples. The properties of the plastic lens having a hard coat film obtained in examples were measured in accordance with the following methods.

After an obtained plastic lens was left standing at the room temperature for one day, evaluations (i) to (iv) shown in the following were conducted.

(i) Evaluation of interference fringes

A material for optical applications having a hard coat film was examined by visual observation under a fluorescent light. The criterion for the evaluation is shown in the following:

| | |
|---|---|
| excellent: | no interference fringes found |
| good: | almost no interference fringes found |
| fair: | some interference fringes found |
| poor: | considerable interference fringes found |

(ii) Evaluation of adhesion

A hard coat film was cross-cut along grid lines drawn at a distance of 1.5 mm to form 100 pieces. After a pressure sensitive adhesive tape (the trade name: CELLOTAPE; manufactured by NICHIBAN Co., Ltd.) was strongly attached to the portion of the hard coat film having the grid lines, the pressure sensitive adhesive tape was rapidly cleaved. The presence or the absence of cleaved pieces was examined. The criterion for the evaluation is shown in the following:

| | |
|---|---|
| excellent: | no cleaved pieces |
| good: | 1 to 10 pieces cleaved |
| fair: | 11 to 50 pieces cleaved |
| poor: | 51 to 100 pieces cleaved |

(iii) Evaluation of transparency

The presence or the absence of cloudiness was examined by visual observation under a fluorescent light in a dark room. The criterion for the evaluation is shown in the following:

| | |
|---|---|
| excellent: | no cloudiness found |
| good: | almost no cloudiness found |
| fair: | some cloudiness found |
| poor: | considerable cloudiness found |

(iv) Measurement of the Bayer value

Using an abrasion tester BTE™ Abrasion Tester (manufactured by COLTS Laboratories, USA) and an apparatus for measuring the haze value (manufactured by Murakami Color Research Laboratory), the Bayer value was measured from the difference in the haze value from the reference lens.

(Number of sample and method for the measurement)

(1) Three reference lenses (a substrate CR39) and three sample lenses were used for the measurement.
(2) The haze value before the abrasion test was measured.
(3) The abrasion test was conducted using BTE™ Abrasion Tester (abrasion of the surface with sand under 600 reciprocal movements).
(4) The haze value after the abrasion test was measured.
(5) The Bayer value was calculated (as the average value of three measurements)

$$\text{Bayer value} = \text{change in transmittance of reference lens} / \text{change in transmittance of sample lens}$$

[Preparation of modified colloid particles of a stannic oxide-zirconium oxide composite]

Preparation Example 1

Step (a)

Oxalic acid $(COOH)_2 \cdot 2H_2O$ in an amount of 37.5 kg was dissolved into 220 kg of pure water. The resultant solution was placed into a 500 liter vessel and heated until the temperature was elevated to 70°C under stirring. To the heated solution, 150 kg of a 35% aqueous solution of hydrogen peroxide and 75 kg of metallic tin (manufactured by Yamaishi Metals Co., Ltd.; the trade name: AT-SN, No. 200N) were added.

The aqueous solution of hydrogen peroxide and metallic tin were added alternately as follows: 10 kg of the

35% aqueous solution of hydrogen peroxide was added first, and 5 kg of metallic tin was then added. After the reaction was completed (in 5 to 10 minutes), this operation was repeated. The time spent by the addition was 2.5 hours. After the addition was entirely completed, the reaction mixture was heated at 90°C for 1 hour, and the reaction was completed. The relative amounts of the aqueous solution of hydrogen peroxide and metallic tin were 2.48 expressed as the ratio of the amounts by mole of $H_2O_2/Sn$.

The obtained sol of stannic oxide exhibited very excellent transparency. The yield of the sol of stannic oxide was 352 kg. The specific gravity was 1.312, the pH was 1.49, and the viscosity was 44 mPa·s. The content of $SnO_2$ was 26.1% by weight.

When the obtained sol was observed by an electron microscope, spherical particles having diameters of 10 to 15 nm were dispersed in an excellent condition. Although the sol showed a slight tendency of increase in the viscosity when the sol was left standing, the sol was stable without formation of gel after being left standing at the room temperature for 6 months.

The obtained sol in an amount of 230 kg was diluted with pure water to a concentration of 5% by weight as $SnO_2$, and 3 kg of isopropylamine was added to the diluted sol. The resultant mixture was passed through a column packed with an anion exchange resin (manufactured by ROHM & HAAS Company; the trade name: AMBERLITE IRA-410), aged by heating at 90°C for 1 hour and passed through a column packed with the anion exchange resin (described above; the trade name: AMBERLITE IRA-410), and 1,431 kg of an alkaline sol of stannic oxide was obtained.

The obtained sol in an amount of 400 kg was treated by heating at 140°C for 5 hours.

<u>Step (b)</u>

To 870 g of an aqueous solution of zirconium oxy chloride (the concentration of $ZrO_2$: 18.4% by weight) (the content of zirconium: 160 g as $ZrO_2$), 1 kg of pure water was added. To the obtained solution, 25.7 kg of the alkaline sol of stannic oxide obtained in step (a) (1,068 g as $SnO_2$) was added at the room temperature under stirring. The obtained mixed fluid was a sol having a ratio of the amounts by weight of $ZrO_2/SnO_2$ of 0.15 and exhibiting a slightly colloidal color and excellent transparency.

<u>Step (c)</u>

The mixed fluid prepared in step (b) was treated by heating at 90°C for 5 hours, and 27.6 kg of a sol of a stannic oxide-zirconium oxide composite was obtained. The sol had a content of 3.37% by weight as $SnO_2$, a content of 0.50% by weight as $ZrO_2$ and a content of 3.87% by weight as $SnO_2+ZrO_2$ and exhibited excellent transparency although the color was a colloidal color.

<u>Step (d)</u>

Diatom No. 3 (having a content of 29.0% by weight as $SiO_2$) in an amount of 207 g was dissolved into 2,650 g of water, and then 60.8 g of sodium tungstate $Na_2WO_4 \cdot 2H_2O$ (having a content of 74% by weight as $WO_3$) and 81.8 g of sodium stannate $NaSnO_3 \cdot H_2O$ (having a content of 55% by weight as $SnO_2$) were dissolved into the resultant fluid. The obtained fluid was passed through a column packed with a cation exchange resin of the hydrogen type (manufactured by ROHM & HAAS Company; the trade name: AMBERLITE IR-120B), and 3,450 g of an acidic sol of a tungsten oxide-stannic oxide-silicon dioxide composite (pH: 2.1; the contents: 1.3% by weight as $WO_3$, 1.3% by weight as $SnO_2$ and 1.7% by weight as $SiO_2$; the ratio of the amounts by weight: $WO_3/SnO_2$=1.0 and $SiO_2/SnO_2$=1.33; the particle diameter: 2.5 nm) was obtained.

<u>Step (e)</u>

To 3,450 g of the sol of a tungsten oxide-stannic oxide-silicon dioxide composite prepared in step (d) (having a content of 150 g as $WO_3+SnO_2+SiO_2$), 12,200 g of the sol of a stannic oxide-zirconium oxide composite prepared in step (c) (having a content of 500 g as $ZrO_2+SnO_2$) was added over 20 minutes at the room temperature under stirring, and the stirring was continued further for 30 minutes. The obtained mixed fluid had a ratio of the amounts by weight of the colloid particles of a tungsten oxide-stannic oxide-silicon dioxide composite ($WO_3+SnO_2+SiO_2$) to the colloid particles of a stannic oxide-zirconium oxide composite ($ZrO_2+SnO_2$), i.e., ($WO_3+SnO_2+SiO_2$)/($ZrO_2+SnO_2$), of 0.30 and a content of the entire metal oxides of 4.2% by weight and exhibited the tendency of white turbidness due to the micro-flocculation of the colloid particles.

Step (f)

To 15,650 g of the mixed fluid obtained in step (e), 11.0 g of diisobutylamine was added. The obtained mixture was passed through a column packed with an anion exchange resin of the hydroxyl group type (described above; AMBERLITE IRA-410) at the room temperature and aged by heating at 80 to 90°C for 1 hour, and 19,680 g of an aqueous sol of a modified stannic oxide-zirconium oxide composite (a dilute fluid) was obtained. The sol had a content of the entire metal oxides of 3.3% by weight and a pH of 10.64 and exhibited excellent transparency although the color was a colloidal color.

The aqueous sol of a modified stannic oxide-zirconium oxide composite obtained in step (f) (the dilute fluid) was concentrated by a filtration apparatus having an ultrafiltration membrane having a 100,000 molecular weight cut-off at the room temperature, and 2,641 g of an aqueous sol of a modified stannic oxide-zirconium oxide composite having a great concentration was obtained. This sol had a content of the entire metal oxides ($ZrO_2$+$SnO_2$+$WO_3$+$SiO_2$) of 24.6% by weight and was stable.

To 2,641 g of the aqueous sol of the modified stannic oxide-zirconium oxide composite having the great concentration, 6.5 g of tartaric acid, 9.8 g of diisobutylamine and one drop of a defoaming agent (manufactured by SAN NOPCO LIMITED; the trade name: SN DEFOAMER 483) were added at the room temperature under stirring, and the resultant mixture was stirred for 1 hour. In a reactor flask equipped with a stirrer, water was removed from the sol by distillation under the ambient pressure while 24 liters of methanol was added in small portions, and 1,620 g of a methanol sol of a modified stannic oxide-zirconium oxide composite in which water in the aqueous sol was replaced with methanol was obtained. The sol had a specific gravity of 1.244, a pH of 6.78 (a mixture with the same amount by weight of water), a viscosity of 1.3 mPa·s, a concentration of the entire metal oxides ($ZrO_2$+$SnO_2$+$WO_3$+$SiO_2$) of 40.5% by weight, a content of water of 0.59% by weight and a particle diameter of 10 to 15 nm as measured by an electron microscope.

After the sol was concentrated to a concentration of 47% by weight expressed as the concentration of the entire metal oxides ($ZrO_2$+$SnO_2$+$WO_3$+$SiO_2$), the concentrated sol was placed into a 100 $cm^3$ measuring cylinder, and the viscosity was measured using a viscometer of the B type having the No. 1 rotor at a rotation speed of 60 rpm. The viscosity was found to be 6.5 mPa·s.

The sol exhibited a colloidal color and excellent transparency and was stable without formation of precipitates or abnormal phenomena such as white turbidness and an increase in the viscosity after being left standing at the room temperature for 3 months. The product obtained after drying the sol had a refractive index of 1.85.

Preparation Example 2

In Preparation Example 2, the same procedures as those conducted in steps (a) to (c) in Preparation Example 1 were conducted, and the following steps were conducted thereafter.

Step (d)

Diatom No. 3 (having a content of 29.0% by weight as $SiO_2$) in an amount of 138 g was dissolved into 1,766 g of water, and then 40.5 g of sodium tungstate $Na_2WO_4 \cdot 2H_2O$ (having a content of 74% by weight as $WO_3$) and 55.6 g of sodium stannate $NaSnO_3 \cdot H_2O$ (having a content of 55% by weight as $SnO_2$) were dissolved into the resultant fluid. The obtained fluid was passed through a column packed with a cation exchange resin of the hydrogen type (described above; AMBERLITE IR-120B), and 2,520 g of an acidic sol of a tungsten oxide-stannic oxide-silicon dioxide composite (pH: 2.0; the contents: 1.2% by weight as $WO_3$, 1.2% by weight as $SnO_2$ and 1.6% by weight as $SiO_2$; the ratio of the amounts by weight: $WO_3/SnO_2$=1.0 and $SiO_2/SnO_2$=1.33; the particle diameter: 2.5 nm) was obtained.

Step (e)

To 2,520 g of the sol of a tungsten oxide-stannic oxide-silicon dioxide composite obtained in step (d) (having a content of 150 g as $WO_3$+$SnO_2$+$SiO_2$), 12,200 g of the sol of a stannic oxide-zirconium oxide composite prepared in step (c) (having a content of 500 g as $ZrO_2$+$SnO_2$) was added over 20 minutes at the room temperature under stirring, and the stirring was continued further for 30 minutes. The obtained mixed fluid had a ratio of the amounts by weight of the colloid particles of a tungsten oxide-stannic oxide-silicon dioxide composite ($WO_3$+$SnO_2$+$SiO_2$) to the colloid particles of a stannic oxide-zirconium oxide composite ($ZrO_2$+$SnO_2$), i.e., ($WO_3$+$SnO_2$+$SiO_2$)/($ZrO_2$+$SnO_2$), of 0.20 and a content of the entire metal oxides of 4.1% by weight and exhibited the tendency of white turbidness due to the micro-flocculation of the colloid particles.

Step (f)

To 14,720 g of the mixed fluid obtained in step (e), 11.0 g of diisobutylamine was added. The obtained mixture was passed through a column packed with an anion exchange resin of the hydroxide type (described above; AMBERLITE IRA-410) at the room temperature and aged by heating at 80 to 90°C for 1 hour, and 18,480 g of an aqueous sol of a modified stannic oxide-zirconium oxide composite (a dilute fluid) was obtained. The sol had a content of the entire metal oxides of 3.2% by weight and a pH of 10.23 and exhibited excellent transparency although the color was a colloidal color.

The aqueous sol of a modified stannic oxide-zirconium oxide composite obtained in step (f) (the dilute fluid) was concentrated by a filtration apparatus having an ultrafiltration membrane having a 100,000 molecular weight cut-off at the room temperature, and 3,458 g of an aqueous sol of a modified stannic oxide-zirconium oxide composite having a great concentration was obtained. This sol had a content of the entire metal oxides ($ZrO_2$+$SnO_2$+$WO_3$+$SiO_2$) of 14.8% by weight and was stable.

To 3,243 g of the aqueous sol of the modified stannic oxide-zirconium oxide composite having the great concentration, 4.8 g of tartaric acid, 7.2 g of diisobutylamine and one drop of a defoaming agent (described above; SN DEFOAMER 483) were added at the room temperature under stirring, and the resultant mixture was stirred for 1 hour. In a reactor flask equipped with a stirrer, water was removed from the sol by distillation under the ambient pressure while 26 liters of methanol was added in small portions, and 1,240 g of a methanol sol of a modified stannic oxide-zirconium oxide composite in which water in the aqueous sol was replaced with methanol was obtained. The sol had a specific gravity of 1.235, a pH of 6.95 (a mixture with the same amount by weight of water), a viscosity of 1.5 mPa·s, a concentration of the entire metal oxides ($ZrO_2$+$SnO_2$+$WO_3$+$SiO_2$) of 40.2% by weight, a content of water of 0.90% by weight and a particle diameter of 10 to 15 nm as measured by an electron microscope.

The sol exhibited a colloidal color and excellent transparency and was stable without formation of precipitates or abnormal phenomena such as white turbidness and an increase in the viscosity after being left standing at the room temperature for 3 months. The product obtained after drying the sol had a refractive index of 1.85.

Preparation Example 3

In Preparation Example 3, the same procedures as those conducted in steps (a) to (c) in Preparation Example 1 were conducted, and the following steps were conducted thereafter.

Step (d)

Diatom No. 3 (having a content of 29.0% by weight as $SiO_2$) in an amount of 101.6 g was dissolved into 1,825 g of water, and then 32.3 g of sodium tungstate $Na_2WO_4 \cdot 2H_2O$ (having a content of 74% by weight as $WO_3$) and 40.8 g of sodium stannate $NaSnO_3 \cdot H_2O$ (having a content of 55% by weight as $SnO_2$) were dissolved into the resultant fluid. The obtained fluid was passed through a column packed with a cation exchange resin of the hydrogen type (described above; AMBERLITE IR-120B), and 2,640 g of an acidic sol of a tungsten oxide-stannic oxide-silicon dioxide composite (pH: 2.1; the contents: 0.9% by weight as $WO_3$, 0.9% by weight as $SnO_2$ and 1.1% by weight as $SiO_2$; the ratio of the amounts by weight: $WO_3/SnO_2$=1.0 and $SiO_2/SnO_2$=1.33; the particle diameter: 2.5 nm) was obtained.

Step (e)

To 2,640 g of the sol of a tungsten oxide-stannic oxide-silicon dioxide composite obtained in step (d) (having a content of 75 g as $WO_3$+$SnO_2$+$SiO_2$), 12,200 g of the sol of a stannic oxide-zirconium oxide composite prepared in step (c) (having a content of 500 g as $ZrO_2$+$SnO_2$) was added over 20 minutes at the room temperature under stirring, and the stirring was continued further for 30 minutes.

The obtained mixed fluid had a ratio of the amounts by weight of the colloid particles of a tungsten oxide-stannic oxide-silicon dioxide composite ($WO_3$+$SnO_2$+$SiO_2$) to the colloid particles of a stannic oxide-zirconium oxide composite ($ZrO_2$+$SnO_2$), i.e., ($WO_3$+$SnO_2$+$SiO_2$)/ ($ZrO_2$+$SnO_2$), of 0.14 and a content of the entire metal oxides of 3.9% by weight and exhibited the tendency of white turbidness due to the micro-flocculation of the colloid particles.

Step (f)

To 14,840 g of the mixed fluid obtained in step (e), 11.0 g of diisobutylamine was added. The obtained mixture was passed through a column packed with an anion exchange resin of the hydroxide type (described above; AMBERLITE IRA-410) at the room temperature and aged by heating at 80 to 90°C for 1 hour, and 19,360 g of an aqueous sol of a modified stannic oxide-zirconium oxide composite (a dilute fluid) was obtained. The sol had a content of the entire metal oxides of 3.0% by weight and a pH of 10.50 and exhibited excellent transparency although the color was a colloidal color.

The aqueous sol of a modified stannic oxide-zirconium oxide composite obtained in step (f) (the dilute fluid) was concentrated by a filtration apparatus having an ultrafiltration membrane having a 100,000 molecular weight cut-off at the room temperature, and 2,352 g of an aqueous sol of a modified stannic oxide-zirconium oxide composite having a great concentration was obtained. This sol had a content of the entire metal oxides ($ZrO_2$+$SnO_2$+$WO_3$+$SiO_2$) of 22.0% by weight and was stable.

To 2,272 g of the aqueous sol of the modified stannic oxide-zirconium oxide composite having the great concentration, 5.0 g of tartaric acid, 7.5 g of diisobutylamine and one drop of a defoaming agent (described above; SN DEFOAMER 483) were added at the room temperature under stirring, and the resultant mixture was stirred for 1 hour. In a reactor flask equipped with a stirrer, water was removed from the sol by distillation under the ambient pressure while 22 liters of methanol was added in small portions, and 1,190 g of a methanol sol of a modified stannic oxide-zirconium oxide composite in which water in the aqueous sol was replaced with methanol was obtained. The sol had a specific gravity of 1.232, a pH of 6.92 (a mixture with the same amount by weight of water), a viscosity of 1.3 mPa·s, a concentration of the entire metal oxides ($ZrO_2$+$SnO_2$+$WO_3$+$SiO_2$) of 40.3% by weight, a content of water of 0.43% by weight and a particle diameter of 10 to 15 nm as measured by an electron microscope.

The sol exhibited a colloidal color and excellent transparency and was stable without formation of precipitates or abnormal phenomena such as white turbidness and an increase in the viscosity after being left standing at the room temperature for 3 months. The product obtained after drying the sol had a refractive index of 1.85.

Preparation Example 4

Step (a)

Oxalic acid $(COOH)_2 \cdot 2H_2O$ in an amount of 37.5 kg was dissolved into 363 kg of pure water. The resultant solution was placed into a 500 liter vessel and heated until the temperature was elevated to 70°C under stirring. To the heated solution, 150 kg of a 35% aqueous solution of hydrogen peroxide and 75 kg of metallic tin (described above; the trade name: AT-SN, No. 200N) were added.

The aqueous solution of hydrogen peroxide and metallic tin were added alternately as follows: 10 kg of the 35% aqueous solution of hydrogen peroxide was added first, and 5 kg of metallic tin was then added. After the reaction was completed (in 5 to 10 minutes), this operation was repeated. The time spent by the addition was 2.5 hours. After the addition was entirely completed, 10 kg of a 35% aqueous solution of hydrogen peroxide was added. The reaction mixture was heated at 90°C for 1 hour, and the reaction was completed. The ratio of the amounts by mole of the aqueous solution of hydrogen peroxide and metallic tin was 2.60 expressed as $H_2O_2/Sn$.

The obtained sol of stannic oxide exhibited very excellent transparency. The yield of the sol of stannic oxide was 622 kg. The specific gravity was 1.156, the pH was 1.56 and the content of $SnO_2$ was 15.0% by weight.

When the obtained sol was observed by an electron microscope, spherical particles having diameters of 10 to 15 nm were dispersed in an excellent condition. Although the sol showed a slight tendency of increase in the viscosity when the sol was left standing, the sol was stable without formation of gel.

The obtained sol in an amount of 622 kg was diluted with pure water to a concentration of 5% by weight as $SnO_2$, and 4.7 kg of isopropylamine was added to the diluted sol. The resultant mixture was passed through a column packed with an anion exchange resin (described above; AMBERLITE IRA-410), aged by heating at 95°C for 1 hour and passed through a column packed with the anion exchange resin (described above; AMBERLITE IRA-410), and 2,194 kg of an alkaline sol of stannic oxide was obtained. The obtained sol was treated by heating at 140°C for 5 hours.

Step (b)

To 76.1 kg of an aqueous solution of zirconium oxychloride (the concentration of $ZrO_2$: 17.68% by weight) (the content of zirconium: 13.5 kg as $ZrO_2$), 330 kg of pure water and 3.2 kg of a 35% hydrochloric acid were added. To the obtained solution, 2,597 kg of the alkaline sol of stannic oxide obtained in step (a) (89.7 kg as $SnO_2$) was added at the room temperature under stirring. The obtained mixed fluid was a sol having a ratio of the amounts by weight of $ZrO_2/SnO_2$ of 0.15 and exhibiting a slight colloidal color and excellent transparency.

Step (c)

The mixed fluid prepared in step (b) was subjected to a heat treatment at 95°C for 5 hours, and 2,958 kg of a sol of a stannic oxide-zirconium oxide composite was obtained. The sol had a content of 3.03% by weight as $SnO_2$, a content of 0.46% by weight as $ZrO_2$ and a content of 3.49% by weight as $SnO_2$+$ZrO_2$ and exhibited excellent transparency although the color was a colloidal color.

Step (d)

Diatom No. 3 (having a content of 29.3% by weight as $SiO_2$) in an amount of 38.9 kg was dissolved into 830 kg of pure water, and then 12.2 kg of sodium tungstate $Na_2WO_4 \cdot 2H_2O$ (having a content of 69.8% by weight as $WO_3$) and 15.3 kg of sodium stannate $Na_2SnO_3$ $3H_2O$ (having a content of 55.7% by weight as $SnO_2$) were dissolved into the resultant fluid. The obtained fluid was passed through a column packed with a cation exchange resin of the hydrogen type (described above; AMBERLITE IR-120B), and 1,201 g of an acidic sol of a tungsten oxide-stannic oxide-silicon dioxide composite (pH: 2.2; the contents: 0.7% by weight as $WO_3$, 0.7% by weight as $SnO_2$ and 0.9% by weight as $SiO_2$; the ratio of the amounts by weight: $WO_3/SnO_2$=1.0 and $SiO_2/SnO_2$=1.33) was obtained.

Step (e)

To 1,179 kg of the sol of a tungsten oxide-stannic oxide-silicon dioxide composite obtained in step (d) (having a content of 28.4 kg as $WO_3+SnO_2+SiO_2$), 2,958 kg of the sol of a stannic oxide-zirconium oxide composite prepared in step (c) (having a content of 103.2 kg as $ZrO_2+SnO_2$) was added over 60 minutes at the room temperature under stirring, and the stirring was continued further for 10 minutes. The obtained mixed fluid had a ratio of the amounts by weight of the colloid particles of a tungsten oxide-stannic oxide-silicon dioxide composite ($WO_3+SnO_2+SiO_2$) to the colloid particles of a stannic oxide-zirconium oxide composite ($ZrO_2+SnO_2$), i.e., $(WO_3+SnO_2+SiO_2)/(ZrO_2+SnO_2)$, of 0.25 and a content of the entire metal oxides of 3.46% by weight and exhibited the tendency of white turbidness due to the micro-flocculation of the colloid particles.

Step (f)

To 3,798 kg of the mixed fluid obtained in step (e), 2.3 kg of diisobutylamine was added. The obtained mixture was passed through a column packed with an anion exchange resin of the hydroxide type (described above; AMBERLITE IRA-410) at the room temperature and aged by heating at 90°C for 1 hour, and an aqueous sol of a modified stannic oxide-zirconium oxide composite (a dilute fluid) was obtained. The sol had a pH of 9.59 and exhibited excellent transparency although the color was a colloidal color.

The aqueous sol of a modified stannic oxide-zirconium oxide composite obtained in step (f) (the dilute fluid) was concentrated by a filtration apparatus having an ultrafiltration membrane having a 100,000 molecular weight cut-off at 40 to 50°C, and 365 kg of an aqueous sol of a modified stannic oxide-zirconium oxide composite having a great concentration was obtained. This sol had a content of the entire metal oxides ($ZrO_2+SnO_2+WO_3+SiO_2$) of 33.5% by weight and was stable.

To 350 kg of the sol of the modified stannic oxide-zirconium oxide composite having the great concentration, 1.1 kg of tartaric acid, 1.7 kg of diisobutylamine and one drop of a defoaming agent (described above; SN DEFOAMER 483) were added at the room temperature under stirring, and the resultant mixture was stirred for 1 hour. In a reactor flask equipped with a stirrer, water was removed from the sol by distillation under the ambient pressure while 4,203 kg of methanol was added, and 218 kg of a methanol sol of a modified stannic oxide-zirconium oxide composite in which water in the aqueous sol was replaced with methanol was obtained. The sol had a specific gravity of 1.285, a pH of 6.40 (a mixture with the same amount by weight of water), a viscosity of 1.3 mPa·s, a concentration of the entire metal oxides ($ZrO_2+SnO_2+WO_3+SiO_2$) of 42.8% by weight, a content of water of 0.34% by weight and a particle diameter of 10 to 15 nm as measured by an electron microscope.

After the sol was concentrated to a concentration of 47.8% by weight expressed as the concentration of the entire metal oxides ($ZrO_2+SnO_2+WO_3+SiO_2$), the concentrated sol was placed into a 100 $cm^3$ measuring cylinder, and the viscosity was measured using a viscometer of the B type having the No. 1 rotor at a rotation speed of 60 rpm. The viscosity was found to be 5.5 mPa·s.

The sol exhibited a colloidal color and excellent transparency and was stable without formation of precipitates or abnormal phenomena such as white turbidness and an increase in the viscosity at the room temperature. The product obtained after drying the sol had a refractive index of 1.85.

Preparation Example 5

Step (a)

Oxalic acid $(COOH)_2 \cdot 2H_2O$ in an amount of 37.5 kg was dissolved into 363 kg of pure water. The resultant solution was placed into a 500 liter vessel and heated until the temperature was elevated to 70°C under stirring. To the heated solution, 150 kg of a 35% aqueous solution of hydrogen peroxide and 75 kg of metallic tin (described above; AT-SN, No. 200N) were added.

The aqueous solution of hydrogen peroxide and metallic tin were added alternately as follows: 10 kg of the 35% aqueous solution of hydrogen peroxide was added first, and 5 kg of metallic tin was then added. After the reaction was completed (in 5 to 10 minutes), this operation was repeated. The time spent by the addition was 2.5 hours. After the addition was entirely completed, 10 kg of a 35% aqueous solution of hydrogen peroxide was added. The reaction mixture was heated at 90°C for 1 hour, and the reaction was completed. The relative amounts of the aqueous solution of hydrogen peroxide and metallic tin were 2.60 expressed as the ratio of the amounts by mole of $H_2O_2/Sn$.

The obtained sol of stannic oxide exhibited very excellent transparency. The yield of the sol of stannic oxide was 626 kg. The specific gravity was 1.154, and the pH was 1.56. The content of $SnO_2$ was 14.9% by weight.

When the obtained sol was observed by an electron microscope, spherical particles having diameters of 10 to 15 nm were dispersed in an excellent condition. Although the sol showed a slight tendency of increase in the viscosity when the sol was left standing, the sol was stable without formation of gel.

The obtained sol in an amount of 626 kg was diluted with pure water to a concentration of 5% by weight as $SnO_2$; and 4.66 kg of isopropylamine was added to the diluted sol. The resultant mixture was passed through a column packed with an anion exchange resin (described above; AMBERLITE IRA-410), aged by heating at 95°C for 1 hour and passed through a column packed with the anion exchange resin (described above; AMBERLITE IRA-410), and 2,535 kg of an alkaline sol of stannic oxide was obtained. The obtained sol was treated by heating at 140°C for 5 hours.

Step (b)

To 78.2 kg of an aqueous solution of zirconium oxychloride (the concentration of $ZrO_2$: 17.68% by weight) (content of zirconium: 13.8 kg as $ZrO_2$), 300 kg of pure water and 3.3 kg of a 35% hydrochloric acid were added. To the obtained solution, 2,529 kg of the alkaline sol of stannic oxide obtained in step (a) (91.0 kg as $SnO_2$) was added at the room temperature under stirring. The obtained mixed fluid was a sol having a ratio of the amounts by weight of $ZrO_2/SnO_2$ of 0.15 and exhibiting slightly a colloidal color and excellent transparency.

Step (c)

The mixed fluid prepared in step (b) was treated by heating at 95°C for 5 hours, and 3,471 kg of a sol of a stannic oxide-zirconium oxide composite was obtained. The sol had a content of 2.62% by weight as $SnO_2$, a content of 0.40% by weight as $ZrO_2$ and a content of 3.01% by weight as $SnO_2$+$ZrO_2$ and exhibited excellent transparency although the color was a colloidal color.

Step (d)

Diatom No. 3 (having a content of 29.3% by weight as $SiO_2$) in an amount of 49.8 kg was dissolved into 898 kg of pure water, and then 10.5 kg of sodium tungstate $Na_2WO_4 \cdot 2H_2O$ (having a content of 69.8% by weight as $WO_3$) and 13.1 kg of sodium stannate $Na_2SnO_3$ $3H_2O$ (having a content of 55.7 % by weight as $SnO_2$) were dissolved into the resultant fluid. The obtained fluid was passed through a column packed with a cation exchange resin of the hydrogen type (described above; AMBERLITE IR-120B), and 1,179 kg of an acidic sol of a tungsten oxide-stannic oxide-silicon dioxide composite (pH: 2.0; the contents: 0.6% by weight as $WO_3$, 0.6% by weight as $SnO_2$ and 1.2% by weight as $SiO_2$; the ratio of the amounts by weight: $WO_3/SnO_2$=1.0 and $SiO_2/SnO_2$=2.0) was obtained.

Step (e)

To 1,179 kg of the sol of a tungsten oxide-stannic oxide-silicon dioxide composite obtained in step (d) (having a content of 29.2 kg as $WO_3$+$SnO_2$+$SiO_2$), 3,471 kg of the sol of a stannic oxide-zirconium oxide composite prepared in step (c) (having a content of 104.8 kg as $ZrO_2$+$SnO_2$) was added over 60 minutes at the room temperature under stirring, and the stirring was continued further for 10 minutes. The obtained mixed fluid had a ratio of the amounts by weight of the colloid particles of a tungsten oxide-stannic oxide-silicon dioxide composite $WO_3$+$SnO_2$+$SiO_2$) to the colloid particles of a stannic oxide-zirconium oxide composite ($ZrO_2$+$SnO_2$), i.e., $WO_3$+$SnO_2$+$SiO_2$)/($ZrO_2$+$SnO_2$), of 0.25 and a content of the entire metal oxides of 2.9% by weight and exhibited the tendency of white turbidness due to the microflocculation of the colloid particles.

Step (f)

To 4,650 kg of the mixed fluid obtained in step (e), 2.3 kg of diisobutylamine was added. The obtained mixture was passed through a column packed with an anion exchange resin of the hydroxyl group type (described above; AMBERLITE IRA-410) at the room temperature and aged by heating at 90°C for 1 hour, and an aqueous sol of a modified

stannic oxide-zirconium oxide composite (a dilute fluid) was obtained. The sol had a pH of 9.10 and exhibited excellent transparency although the color was colloidal color.

The aqueous sol of a modified stannic oxide-zirconium oxide composite obtained in step (f) (the dilute fluid) was concentrated by a filtration apparatus having an ultrafiltration membrane having a 100,000 molecular weight cut-off at 40 to 50°C, and 358 kg of an aqueous sol of a modified stannic oxide-zirconium oxide composite having a great concentration was obtained. This sol had a content of the entire metal oxides ($ZrO_2$+$SnO_2$+$WO_3$+$SiO_2$) of 31.9% by weight and was stable.

To 358 kg of the sol of the modified stannic oxide-zirconium oxide composite having the great concentration, 1.1 kg of tartaric acid, 1.7 kg of diisobutylamine and one drop of a defoaming agent (described above; SN DEFOAMER 483) were added at the room temperature under stirring, and the resultant mixture was stirred for 1 hour. In a reactor flask equipped with a stirrer, water was removed from the sol by distillation under the ambient pressure while 5,010 liters of methanol was added, and 220 kg of a methanol sol of a modified stannic oxide-zirconium oxide composite in which water in the aqueous sol was replaced with methanol was obtained. The sol had a specific gravity of 1.280, a pH of 6.59 (a mixture with the same amount by weight of water), a viscosity of 2.1 mPa·s, a concentration of the entire metal oxides ($ZrO_2$+$SnO_2$+$WO_3$+$SiO_2$) of 42.8% by weight, a content of water of 0.43% by weight and a particle diameter of 10 to 15 nm as measured by an electron microscope.

After the sol was concentrated to a concentration of 46.8% by weight expressed as the concentration of the entire metal oxides ($ZrO_2$+$SnO_{2+}$$WO_3$+$SiO_2$), the concentrated sol was placed into a 100 $cm^3$ measuring cylinder, and the viscosity was measured using a viscometer of the B type having the No. 1 rotor at a rotation speed of 60 rpm. The viscosity was found to be 6.3 mPa·s.

The sol exhibited a colloidal color and excellent transparency and was stable without formation of precipitates or abnormal phenomena such as white turbidness and an increase in the viscosity at the room temperature. The product obtained after drying the sol had a refractive index of 1.85.

Preparation Example 6

Step (a)

Oxalic acid $(COOH)_2 \cdot 2H_2O$ in an amount of 37.5 kg was dissolved into 383 kg of pure water. The resultant solution was placed into a 500 liter vessel and heated until the temperature was elevated to 70°C under stirring. To the heated solution, 150 kg of a 35% aqueous solution of hydrogen peroxide and 75 kg of metallic tin (described above; AT-SN, No. 200N) were added.

The aqueous solution of hydrogen peroxide and metallic tin were added alternately as follows: 10 kg of the 35% aqueous solution of hydrogen peroxide was added first, and 5 kg of metallic tin was then added. After the reaction was completed (in 5 to 10 minutes), this operation was repeated. The time spent by the addition was 2.5 hours. After the addition was entirely completed, 10 kg of a 35% aqueous solution of hydrogen peroxide was added. After the addition, the reaction was completed by heating the solution to 95°C for 1 hour. The relative amounts of the aqueous solution of hydrogen peroxide and metallic tin were 2.61 expressed as the ratio of the amounts by mole of $H_2O_2$/Sn.

The obtained sol of stannic oxide exhibited very excellent transparency. The yield of the sol of stannic oxide was 630 kg. The specific gravity was 1.154, and the pH was 1.51. The content of $SnO_2$ was 14.7% by weight.

When the obtained sol was observed by an electron microscope, spherical particles having diameters of 10 to 15 nm were dispersed in an excellent condition. Although the sol showed a slight tendency of increase in the viscosity when the sol was left standing, the sol was stable without formation of gel after being left standing at the room temperature for 6 months.

To the obtained sol in an amount of 629 kg, 231 kg of a 35% by weight aqueous solution of hydrogen peroxide and 52 kg of pure water were added, and the sol was diluted so that the concentration of stannic oxide was 10% by weight as $SnO_2$ and the ratio of the amounts by mole of $H_2O_2/(COOH)_2$ was 8.0 based on the amount of oxalic acid used at the beginning. The diluted sol was aged by heating at 95°C for 5 hours. Oxalic acid contained in the sol was decomposed into carbon dioxide gas and water by the reaction with hydrogen peroxide in this operation. After the obtained slurry of stannic oxide was cooled to about 40°C, 2.7 kg of isopropylamine was added for deflocculation. Then, the obtained fluid was passed through a column packed with about 15 liters of a platinum-based catalyst (manufactured by SUD CHEMIE CATALYST Company; N-220) and circulated to decompose hydrogen peroxide in an excess amount. The fluid was passed and circulated at a speed of about 30 liters/min for 5 hours. Then, the fluid was passed through a column packed with an anion exchange resin (described above; AMBERLITE IRA-410), and 1,545 kg of an alkaline sol of stannic oxide was obtained. After 1.8 kg of isopropylamine was added to the entire amount of the obtained sol, the obtained sol was treated by heating at 140°C for 5 hours.

Step (b)

To 1,238 kg of pure water, 76 kg of an aqueous solution of zirconium oxychloride (the concentration of $ZrO_2$: 17.68% by weight) (content of zirconium: 13.4 kg as $ZrO_2$) and 3.2 kg of a 35% hydrochloric acid were added. To the obtained solution, 1,538 kg of the alkaline sol of stannic oxide obtained in step (a) (102.9 kg as $SnO_2$) was added at the room temperature under stirring. The obtained mixed fluid was a sol having a ratio of the amounts by weight of $ZrO_2/SnO_2$ of 0.15 and exhibiting slightly a colloidal color and excellent transparency.

Step (c)

The mixed fluid prepared in step (b) was treated by heating at 90°C for 5 hours. After the fluid was cooled and taken out of the reactor, 3,224 kg (including water used for discharge of the fluid) of a sol of a stannic oxide-zirconium oxide composite was obtained. The sol had a content of 2.78% by weight as $SnO_2$, a content of 0.41% by weight as $ZrO_2$ and a content of 3.19% by weight as $SnO_2$+$ZrO_2$ and exhibited excellent transparency although the color was a colloidal color.

Step (d)

Diatom No. 3 (having a content of 29.0% by weight as $SiO_2$) in an amount of 59.5 g was dissolved into 1,083 g of pure water, and then 12.6 g of sodium tungstate $Na_2WO_4 \cdot 2H_2O$ (having a content of 70% by weight as $WO_3$) and 16.2 g of sodium stannate $Na_2SnO_3$ $3H_2O$ (having a content of 55% by weight as $SnO_2$) were dissolved into the resultant solution. The obtained solution was passed through a column packed with a cation exchange resin of the hydrogen type (described above; IR-120B), and 1,520 g of an acidic sol of a tungsten oxide-stannic oxide-silicon dioxide composite (pH: 2.3; the contents: 0.6% by weight as $WO_3$, 0.6% by weight as $SnO_2$ and 1.2% by weight as $SiO_2$; the ratio of the amounts by weight: $WO_3/SnO_2$=1.0 and $SiO_2/SnO_2$=2.0) was obtained.

Separately, 112 g of Diatom No. 3 (having a content of 29.0% by weight as $SiO_2$) was dissolved into 540 g of pure water. The obtained fluid was passed through a column packed with a cation exchange resin of the hydrogen type (described above; IR-120B) to obtain an active silicic acid. To the obtained active silicic acid, 6.9 g of diisobutylamine was added, and 930 g of active silicic acid stabilized with diisobutylamine was obtained.

Step (e)

To 1,520 g of the sol of a tungsten oxide-stannic oxide-silicon dioxide composite obtained in step (d) (having a content of 35.1 g as $WO_3$+$SnO_2$+$SiO_2$), 15,656 g of the sol of a stannic oxide-zirconium oxide composite prepared in step (c) (having a content of 501 g as $ZrO_2$+$SnO_2$) was added over 20 minutes at the room temperature under stirring, and the stirring was continued further for 30 minutes. The active silicic acid stabilized with diisobutylamine was added, and the stirring was continued for 1 hour. The obtained mixed fluid had a ratio of the amounts by weight of the colloid particles of a tungsten oxide-stannic oxide-silicon dioxide composite ($WO_3$+$SnO_2$+$SiO_2$) to the colloid particles of a stannic oxide-zirconium oxide composite ($ZrO_2$+$SnO_2$), i.e., ($WO_3$+$SnO_2$+$SiO_2$)/ ($ZrO_2$+$SnO_2$), of 0.135 and a content of the entire metal oxides of 3.1% by weight and exhibited the tendency of white turbidness due to the micro-flocculation of the colloid particles.

Step (f)

To 18,106 g of the mixed fluid obtained in step (e), 5.0 g of diisobutylamine was added. The obtained mixture was passed through a column packed with an anion exchange resin of the hydroxyl group type (described above; AMBERLITE IRA-410) at the room temperature and aged by heating at 80 to 90°C for 1 hour, and 24,050 g of an aqueous sol of a modified stannic oxide-zirconium oxide composite (a dilute fluid) was obtained. The sol had a content of the entire metal oxides of 2.4% by weight and a pH of 9.25 and exhibited excellent transparency although the color was a colloidal color.

The aqueous sol of a modified stannic oxide-zirconium oxide composite obtained in step (f) (the dilute fluid) was concentrated by a filtration apparatus having an ultrafiltration membrane having a 100,000 molecular weight cut-off at the room temperature, and 2,010 g of an aqueous sol of a modified stannic oxide-zirconium oxide composite having a great concentration was obtained. This sol had a content of the entire metal oxides ($ZrO_2$+$SnO_2$+$WO_3$+$SiO_2$) of 28.2% by weight and was stable.

In a reactor flask equipped with a stirrer, water was removed from 2,010 g of the aqueous sol of the modified stannic oxide-zirconium oxide composite having the great concentration by distillation while 28 liters of methanol was added in small portions under the ambient pressure, and 1,310 g of a methanol sol of a modified stannic oxide-zirconium

oxide composite in which water in the aqueous sol was replaced with methanol was obtained. The sol had a specific gravity of 1.264, a pH of 8.3 (a mixture with the same amount by weight of water), a viscosity of 2.7 mPa·s, a concentration of the entire metal oxides ($ZrO_2$+$SnO_2$+$WO_3$+$SiO_2$) of 42.5% by weight, a content of water of 1.0% by weight and a particle diameter of 10 to 15 nm as measured by an electron microscope.

The sol exhibited a colloidal color and excellent transparency and was stable without formation of precipitates or abnormal phenomena such as white turbidness and an increase in the viscosity after being left standing at the room temperature for 3 months. The product obtained after drying the sol had a refractive index of 1.85.

Comparative Preparation Example 1

Preparation of a sol of a modified stannic oxide-zirconium oxide composite

<Preparation of a sol of stannic oxide> 1,200 g of an aqueous sol of stannic oxide, which was obtained by the reaction of powder of metallic tin, an aqueous hydrochloric acid and an aqueous solution of hydrogen peroxide, had a specific gravity of 1.420, a pH of 0.40, a viscosity of 32 mPa·s immediately after being stirred, a content of $SnO_2$ of 33.0% by weight, a content of HC1 of 2.56% by weight, diameters of colloid particles having a spindle shape of 10 nm or smaller as measured by an electron microscope, a specific surface area of 120 $m^2$/g as measured in accordance with the BET method, a reduced particles diameter of 7.2 nm obtained from the specific surface area and a particle diameter of 107 nm obtained in accordance with the dynamic light scattering method using an apparatus N4 manufactured by Beckman Coulter, Inc., USA and exhibited light yellow color and transparency, was dispersed into 10,800 g of water. To the resultant dispersion, 4.8 g of isopropylamine was added. The obtained mixture was passed through a column packed with an anion exchange resin of the hydroxyl group type, and 13,440 g of an alkaline aqueous sol of stannic oxide was obtained. The obtained sol was stable and exhibited very excellent transparency although the sol exhibited colloidal color. The sol had a specific gravity of 1.029, a pH of 9.80, a viscosity of 1.4 sPa·s, a content of $SnO_2$ of 2.95% by weight and a content of isopropylamine of 0.036% by weight.

<u>Step (a)</u>

Zirconium oxychloride ($ZrOCl_2 \cdot 8H_2O$) of the reagent grade was dissolved into water. To 3,043 g of the prepared aqueous solution of zirconium oxychloride (2.0% by weight as $ZrO_2$) (containing 60.87 g as $ZrO_2$), 10,791 g of the alkaline aqueous sol of stannic oxide prepared above (409.5 g as $SnO_2$) was added at the room temperature under stirring, and the stirring was continued for 2 hours. The mixed fluid was a sol having a ratio of the amounts by weight of $ZrO_2$/$SnO_2$ of 0.15 and a pH of 1.50 and exhibited excellent transparency and a colloidal color.

<u>Step (b)</u> (Preparation of a sol of a stannic oxide-zirconium oxide composite)

The mixed fluid prepared in step (a) was treated by heating at 90°C for 5 hours under stirring, and 13,834 g of a sol of a stannic oxide-zirconium oxide composite was obtained. The sol had a content of $SnO_2$ of 2.96% by weight, a content of $ZrO_2$ of 0.44% by weight, a content of $SnO_2$+$ZrO_2$ of 3.40% by weight, a pH of 1.45, a particle diameter of 9.0 nm and exhibited excellent transparency although the color was a colloidal color.

<u>Step (c)</u> (Preparation of a sol of a tungsten oxide-stannic oxide-silicon dioxide composite)

Diatom No. 3 (having a content of 29.0% by weight as $SiO_2$) in an amount of 113 g was dissolved into 2,353.7g of water, and then 33.3 g of sodium tungstate $Na_2WO_4 \cdot 2H_2O$ (having a content of 71% by weight as $WO_3$) and 42.45 g of sodium stannate $Na_2SnO_3$ $3H_2O$ (having a content of 55 % by weight as $SnO_2$) were dissolved into the resultant fluid. The obtained fluid was passed through a column packed with a cation exchange resin of the hydrogen type, and 3,150 g of an acidic sol of a tungsten oxide-stannic oxide-silicon dioxide composite (pH: 2.1; the contents: 0.75% by weight as $WO_3$, 0.75% by weight as $SnO_2$ and 1.00% by weight as $SiO_2$; the ratio of the amounts by weight: $WO_3$/$SnO_2$=1.0 and $SiO_2$/$SnO_2$=1.33; the particle diameter: 2.5 nm) was obtained.

<u>Step (d)</u>

To 3,150 g of the sol of a tungsten oxide-stannic oxide-silicon dioxide composite obtained in step (c) (having a content of 78.83 g as $WO_3$+$SnO_2$+$SiO_2$), 11,592.6 g of the sol of a stannic oxide-zirconium oxide composite prepared in step (b) (having a content of 394.1 g as $ZrO_2$+$SnO_2$) was added over 20 minutes at the room temperature under stirring, and the stirring was continued further for 30 minutes. The obtained mixed fluid had a ratio of the amounts by weight of the colloid particles of a tungsten oxide-stannic oxide-silicon dioxide composite ($WO_3$+$SnO_2$+$SiO_2$) to the

colloid particles of a stannic oxide-zirconium oxide composite ($ZrO_2$+$SnO_2$), i.e., ($WO_3$+$SnO_2$+$SiO_2$/($ZrO_2$+$SnO_2$), of 0.20, a pH of 2.26 and a content of the entire metal oxides of 3.2% by weight and exhibited the tendency of white turbidness due to the micro-flocculation of the colloid particles.

Step (e) (Preparation of a sol of a modified stannic oxide-zirconium oxide composite)

To 14,742.6 g of the mixed fluid obtained in step (d), 9.5 g of diisobutylamine was added. The obtained mixture was passed through a column packed with an anion exchange resin of the hydroxyl group type (described above; AMBERLITE IRA-410) at the room temperature and aged by heating at 80°C for 1 hour, and 16,288 g of an aqueous sol of a modified stannic oxide-zirconium oxide composite (a dilute fluid) was obtained. The sol had a content of the entire metal oxides of 2.90% by weight and a pH of 10.43 and exhibited excellent transparency although the color was a colloidal color.

The aqueous sol of a modified stannic oxide-zirconium oxide composite obtained in step (e) (the dilute fluid) was concentrated by a filtration apparatus having an ultrafiltration membrane having a 50,000 molecular weight cut-off at room temperature, and 2,182 g of an aqueous sol of a modified stannic oxide-zirconium oxide composite having a great concentration was obtained. This sol had a pH of 8.71 and a content of the entire metal oxides ($ZrO_2$+$SnO_2$+$WO_3$+$SiO_2$) of 18.3% by weight and was stable.

To 2,182 g of the sol of the modified stannic oxide-zirconium oxide composite having the great concentration, 4.0 g of tartaric acid, 6.0 g of diisobutylamine and one drop of a defoaming agent (described above; SN DEFOAMER 483) were added at the room temperature under stirring, and the resultant mixture was stirred for 1 hour. In a reactor flask equipped with a stirrer, water was removed from the sol by distillation under the ambient pressure while 20 liters of methanol was added in small portions, and 1,171 g of a methanol sol of a modified stannic oxide-zirconium oxide composite in which water in the aqueous sol was replaced with methanol was obtained. The sol had a specific gravity of 1.124, a pH of 7.45 (a mixture with the same amount by weight of water), a viscosity of 2.3 mPa·s, a concentration of the entire metal oxides ($ZrO_2$+$SnO_2$+$WO_3$+$SiO_2$) of 32.7% by weight, a content of water of 0.47% by weight and a particle diameter of 10 to 15 nm as measured by an electron microscope. The sol exhibited a colloidal color and excellent transparency and was stable without formation of precipitates or abnormal phenomena such as white turbidness and an increase in the viscosity after being left standing at the room temperature for 3 months. The product obtained after drying the sol had a refractive index of 1.76.

Example 1

[Preparation of a coating composition]

Under an atmosphere of 5°C, 45 parts by weight of the methanol sol of a modified stannic oxide-zirconium oxide-tungsten oxide-silicon oxide composite prepared in Preparation Example 5 as component (A) and 15 parts by weight of γ-glycidoxypropyltrimethoxysilane and 3 parts by weight of tetraethoxysilane as component (B) were mixed, and the resultant mixture was stirred for 1 hour. Then, 4.5 parts by weight of a hydrochloric acid having a concentration of 0.001 mole/liter was added, and the resultant mixture was stirred for 50 hours. Then, 25 parts by weight of propylene glycol monomethyl ether (PGM) and 9 parts by weight of diacetone alcohol (DAA) as the solvents, 1.8 parts by weight of aluminum trisacetylacetonate (AL-AA) as component (C) and 0.05 parts by weight of aluminum perchlorate were added, successively, and the resultant mixture was stirred for 150 hours. The obtained solution was filtered through a filter of 0.5 μm and used as the coating composition.

[Formation of a hard coat film]

A substrate for a lens [manufactured by HOYA Co., Ltd.; the trade name: EYAS (the refractive index: 1.60)] was dipped into an aqueous solution containing 10% by weight of sodium hydroxide at 60°C for 300 seconds and then cleaned for 300 seconds using ion-exchanged water under application of ultrasonic wave of 28 kHz. As the final step in a series of steps for the pretreatment of the substrate, the substrate was dried in an atmosphere of 70°C.

In accordance with the dipping method, the pretreated substrate for a lens EYAS was dipped into the coating composition for 30 seconds and pulled out at a speed of 30 cm/minute. A hard coat film was formed on the substrate under the condition of 120°C and 60 minutes. The results of evaluation are shown in Table 1.

[Formation of an antireflection film]

The plastic substrate coated with the hard coat film was placed into a vapor deposition apparatus. The temperature was raised to 85°C while the apparatus was evacuated. After the evacuation was conducted to a pressure of

2.7 mPa ($2\times10^{-5}$ torr), materials for vapor deposition were vapor deposited in accordance with the electron beam heating method, and a primer layer comprising $SiO_2$ and having a thickness of 0.6 λ, a first refraction layer comprising a mixed layer of $Ta_2O_5$, $ZrO_2$ and $Y_2O_3$ (nd=2.05, nλ=0.075λ) and an $SiO_2$ layer (nd=1.46, nλ=0.056λ) and a second refraction layer (nd=1.46, nλ=0.25λ) comprising a mixed layer of $Ta_2O_5$, $ZrO_2$ and $Y_2O_3$ (nd=2.05, nλ=0.075λ) and an $SiO_2$ layer were formed on the primer layer. Thus, an antireflection layer was formed. The results of the evaluation are shown in Table 1.

Example 2

A coating composition was prepared in accordance with the same procedures as those conducted in Example 1 except that the methanol sol of a modified stannic oxide-zirconium oxide-tungsten oxide-silicon oxide composite of component (A) prepared in Preparation Example 1 was used in place of the methanol sol of a modified stannic oxide-zirconium oxide-tungsten oxide-silicon oxide composite of component (A) prepared in Preparation Example 5, and a hard coat film and an antireflection film were formed on the lens substrate EYAS in accordance with the same procedures. The results of the evaluation are shown in Table 1.

Example 3

A coating composition was prepared in accordance with the same procedures as those conducted in Example 1 except that the methanol sol of a modified stannic oxide-zirconium oxide-tungsten oxide-silicon oxide composite of component (A) prepared in Preparation Example 2 was used in place of the methanol sol of a modified stannic oxide-zirconium oxide-tungsten oxide-silicon oxide composite of component (A) prepared in Preparation Example 5, and a hard coat film and an antireflection film were formed on the lens substrate EYAS in accordance with the same procedures. The results of the evaluation are shown in Table 1.

Example 4

A coating composition was prepared in accordance with the same procedures as those conducted in Example 1 except that the methanol sol of a modified stannic oxide-zirconium oxide-tungsten oxide-silicon oxide composite of component (A) prepared in Preparation Example 3 was used in place of the methanol sol of a modified stannic oxide-zirconium oxide-tungsten oxide-silicon oxide composite of component (A) prepared in Preparation Example 5, and a hard coat film and an antireflection film were formed on the lens substrate EYAS in accordance with the same procedures. The results of the evaluation are shown in Table 1.

Example 5

A coating composition was prepared in accordance with the same procedures as those conducted in Example 1 except that the methanol sol of a modified stannic oxide-zirconium oxide-tungsten oxide-silicon oxide composite of component (A) prepared in Preparation Example 4 was used in place of the methanol sol of a modified stannic oxide-zirconium oxide-tungsten oxide-silicon oxide composite of component (A) prepared in Preparation Example 5, and a hard coat film and an antireflection film were formed on the lens substrate EYAS in accordance with the same procedures. The results of the evaluation are shown in Table 1.

Example 6

A coating composition was prepared in accordance with the same procedures as those conducted in Example 1 except that γ-glycidoxypropyltriethoxysilane was used in place of γ-glycidoxypropyltrimethoxysilane used in Example 1, and a hard coat film and an antireflection film were formed on the lens substrate EYAS in accordance with the same procedures. The results of the evaluation are shown in Table 1.

Example 7

A coating composition was prepared in accordance with the same procedures as those conducted in Example 1 except that y-methacryloxypropyltrimethoxysilane was used in place of γ-glycidoxypropyltrimethoxysilane used in Example 1, and a hard coat film and an antireflection film were formed on the lens substrate EYAS in accordance with the same procedures. The results of the evaluation are shown in Table 1.

Example 8

A coating composition was prepared in accordance with the same procedures as those conducted in Example 1 except that tetramethoxysilane was used in place of tetraethoxysilane used in Example 1, and a hard coat film and an antireflection film were formed on the lens substrate EYAS in accordance with the same procedures. The results of the evaluation are shown in Table 1.

Example 9

A coating composition was prepared in accordance with the same procedures as those conducted in Example 1 except that isopropanol (IPA) was used in place of propylene glycol monomethyl ether (PGM) used in Example 1, and a hard coat film and an antireflection film were formed on the lens substrate EYAS in accordance with the same procedures. The results of the evaluation are shown in Table 1.

Example 10

A coating composition was prepared in accordance with the same procedures as those conducted in Example 1 except that 1-butanol was used in place of propylene glycol monomethyl ether (PGM) used in Example 1, and a hard coat film and an antireflection film were formed on the lens substrate EYAS in accordance with the same procedures. The results of the evaluation are shown in Table 1.

Example 11

A coating composition was prepared in accordance with the same procedures as those conducted in Example 1 except that the methanol sol of a modified stannic oxide-zirconium oxide-tungsten oxide-silicon oxide composite of component (A) prepared in Preparation Example 6 was used in place of the methanol sol of a modified stannic oxide-zirconium oxide-tungsten oxide-silicon oxide composite of component (A) prepared in Preparation Example 5, and a hard coat film and an antireflection film were formed on the lens substrate EYAS in accordance with the same procedures. The results of the evaluation are shown in Table 1.

Comparative Example 1

Into a reactor equipped with a rotating rod for preparation of a coating agent, 15 parts by weight of γ-glycidoxypropyltrimethoxysilane and 49 parts by weight of the methanol sol of a modified stannic oxide-zirconium oxide composite obtained in Comparative Preparation Example 1 were placed, and the resultant mixture was stirred at 4°C for 3 hours. Then, 3.5 parts by weight of a 0.001 N hydrochloric acid was slowly added into the reactor dropwise, and the resultant mixture was stirred at 4°C for 48 hours. To the obtained mixture, 30 parts by weight of propylene glycol monomethyl ether and 0.04 parts by weight of a silicone-based surfactant were added and mixed together. After the resultant mixture was stirred at 4°C for 3 hours, 0.60 parts by weight of aluminum acetylacetonate and 0.05 parts by weight of aluminum perchlorate (manufactured by ALDRICH Company) were added and mixed together. The resultant mixture was stirred at 4°C for 3 days and left standing at 4°C for 2 days, and a coating agent was prepared. Using the prepared coating agent, a hard coat film and an antireflection film were formed on the substrate for a lens EYAS in accordance with the same procedures as those conducted in Example 1. An antireflection film was formed in accordance with the same procedures as those conducted in Example 1, and the evaluations were conducted. The results of the evaluation are shown in Table 1.

Comparative Example 2

The same procedures as those conducted in Comparative Example 1 were conducted except that 15 parts by weight of β-(3,4-epoxycyclohexyl)ethyltrimethoxysilane was used in place of 15 parts by weight of γ-glycidoxypropyltrimethoxysilane. The results of the evaluation are shown in Table 1.

Table 1

| | Interference fringes | | Adhesion | | Transparency | | Bayer value | |
|---|---|---|---|---|---|---|---|---|
| | hard coat film | antireflection film | hard coat film | antireflection film | hard coat film | antireflection film | hard coat film | anti-reflection film |
| Example 1 | excellent | excellent | excellent | excellent | excellent | excellent | 3 | 5 |
| Example 2 | excellent | excellent | excellent | excellent | excellent | excellent | 3 | 5 |
| Example 3 | excellent | excellent | excellent | excellent | excellent | excellent | 3 | 5 |
| Example 4 | excellent | excellent | excellent | excellent | excellent | excellent | 3 | 5 |
| Example 5 | excellent | excellent | excellent | excellent | excellent | excellent | 3 | 5 |
| Example 6 | excellent | excellent | excellent | excellent | excellent | excellent | 3 | 5 |
| Example 7 | excellent | excellent | excellent | excellent | excellent | excellent | 3 | 5 |
| Example 8 | excellent | excellent | excellent | excellent | excellent | excellent | 3 | 5 |
| Example 9 | excellent | excellent | excellent | excellent | excellent | excellent | 3 | 5 |
| Example 10 | excellent | excellent | excellent | excellent | excellent | excellent | 3 | 5 |
| Example 11 | excellent | excellent | excellent | excellent | excellent | excellent | 3 | 5 |
| Comparative Example 1 | excellent | excellent | excellent | excellent | excellent | excellent | 1.7 | 3 |
| Comparative Example 2 | excellent | excellent | excellent | excellent | excellent | excellent | 1.7 | 3 |

INDUSTRIAL APPLICABILITY

In the plastic lens obtained in accordance with the method of the present invention, a hard coat film is formed on a plastic substrate using a coating composition comprising colloid particles of a modified stannic oxide-zirconium oxide composite having specific properties and an organosilicon compound. The plastic lens exhibits excellent appearance in combination with excellent water resistance, moisture resistance, light resistance, antistatic property, heat resistance and abrasion resistance.

## Claims

**1.** A method for producing a plastic lens which comprises forming a hard coat film by coating a plastic substrate with a coating composition comprising:

(A) modified colloid particles of a stannic oxide-zirconium oxide composite having diameters of 4.5 to 60 nm which are formed by coating surface of nuclei with colloid particles of a tungsten oxide-stannic oxide-silicon dioxide composite having diameters of 2 to 7 nm, a ratio of amounts by weight of $WO_3/SnO_2$ of 0.1 to 100 and a ratio of amounts by weight of $SiO_2/SnO_2$ of 0.1 to 100 using as the nuclei colloid particles of a stannic oxide-zirconium oxide composite having diameters of 4 to 50 nm and a structure formed by bonding colloid particles of stannic oxide obtained by reaction of metallic tin, an organic acid selected from oxalic acid or an organic acid comprising oxalic acid as a main component and hydrogen peroxide and colloid particles of zirconium oxide to each other in amounts such that a ratio of amounts by weight of the oxides of $ZrO_2/SnO_2$ is 0.02 to 1.0, and
(B) an organosilicon compound.

**2.** A method for producing a plastic lens according to Claim 1, wherein the modified colloid particles of a stannic oxide-zirconium oxide composite are produced in accordance with a process comprising steps (a) to (f):

step (a): a step comprising forming colloid particles of stannic oxide having diameters of 4 to 50 nm by reacting hydrogen peroxide and metallic tin in an aqueous solution of an organic acid selected from oxalic acid or an organic acid comprising oxalic acid as a main component in a manner such that a concentration of stannic oxide is 40% by weight or smaller while a ratio of amounts by mole of hydrogen peroxide to metallic tin $H_2O_2/Sn$ is kept in a range of 2 to 4;
step (b): a step comprising mixing an aqueous sol of stannic oxide which comprises colloid particles of stannic oxide having diameters of 4 to 50 nm obtained in step (a) in a concentration of 0.5 to 50% by weight as an oxide $SnO_2$ with an aqueous solution which comprises an oxy zirconium salt in a concentration of 0.5 to 50% by weight as an oxide $ZrO_2$ in relative amounts such that a ratio of amounts by weight as the oxides $ZrO_2/SnO_2$ is 0.02 to 1.0;
step (c): a step comprising forming an aqueous sol of stannic oxide-zirconium oxide composite having particle diameters of 4 to 50 nm by a heat treatment of a mixed fluid obtained in step (b) at 60 to 200°C for 0.1 to 50 hours;
step (d): a step comprising preparing an aqueous solution comprising a tungsten salt, a tin salt and a salt of silicic acid in relative amounts such that a ratio of amounts by weight of $WO_3/SnO_2$ is 0.1 to 100 and a ratio of amounts by weight of $SiO_2/SnO_2$ is 0.1 to 100, and forming a sol of a tungsten oxide-stannic oxide-silicon dioxide composite by removing cations in the prepared aqueous solution;
step (e): a step comprising forming a modified aqueous sol of a stannic oxide-zirconium oxide composite by mixing the aqueous sol of stannic oxide-zirconium oxide composite obtained in step (c) in an amount such that a total of amounts of $ZrO_2$ and $SnO_2$ in the aqueous sol is 100 parts by weight with the sol of a tungsten oxide-stannic oxide-silicon dioxide composite obtained in step (d) having particle diameters of 2 to 7 nm, a ratio of amounts by weight of $WO_3/SnO_2$ of 0.1 to 100 and a ratio of amounts by weight of $SiO_2/SnO_2$ of 0.1 to 100 in an amount such that a total of amounts of $WO_3$, $SnO_2$ and $SiO_2$ in the sol is 2 to 100 parts by weight at 0 to 100°C; and
step (f): a step comprising bringing the modified aqueous sol of a stannic oxide-zirconium oxide composite obtained in step (e) into contact with an anion exchanger to remove anions present in the sol.

**3.** A method for producing a plastic lens according to any one of Claims 1 or 2, wherein the organosilicon compound of component (B) is at least one compound selected from compounds represented by general formula (I):

$$R^1{}_nSi(OR^2)_{4-n} \cdots \qquad (I)$$

wherein $R^1$ represents a monovalent hydrocarbon group having 1 to 20 carbon atoms which has or does not have functional groups, $R^2$ represents an alkyl group having 1 to 8 carbon atoms, an aryl group having 6 to 10 carbon atoms, an aralkyl group having 7 to 10 carbon atoms or an acyl group having 2 to 10 carbon atoms, n represents 0, 1 or 2, a plurality of groups represented by $R^1$ may be a same with or different from each other when a plurality of $R^1$ are present, and a plurality of groups represented by $OR^2$ may be a same with or different from each other when a plurality of $OR^2$ are present;
compounds represented by general formula (II):

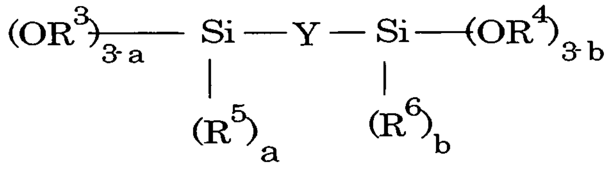

... (II)

wherein $R^3$ and $R^4$ each represent an alkyl group having 1 to 4 carbon atoms or an acyl group having 2 to 4 carbon atoms, the groups represented by $R^3$ and $R^4$ may be a same with or different from each other, $R^5$ and $R^6$ each represent a monovalent hydrocarbon group having 1 to 5 carbon atoms having or not having functional groups, the groups represented by $R^5$ and $R^6$ may be a same with or different from each other, Y represents a divalent hydrocarbon group having 2 to 20 carbon atoms, a and b each represent 0 or 1, a plurality of groups represented by $OR^3$ may be a same with or different from each other, and a plurality of groups represented by $OR^4$ may be a same with or different from each other;
and hydrolysis products thereof.

**4.** A method for producing a plastic lens according to any one of Claims 1 to 3, wherein the coating composition comprises the colloid particles of component (A) in an amount of 1 to 500 parts by weight as solid components per 100 parts by weight of the organosilicon compound of component (B).

**5.** A method for producing a plastic lens according to any one of Claims 1 to 4, wherein the coating composition comprises (C) a metal salt of acetylacetone.

**6.** A method for producing a plastic lens according to any one of Claims 1 to 5, which comprises a film formed by vapor deposition on the hard coat film.

**Patentansprüche**

**1.** Verfahren zur Herstellung einer Kunststofflinse, welches umfasst: das Bilden eines harten Beschichtungsfilms durch Beschichten eines Plastiksubstrats mit einer Beschichtungszusammensetzung, umfassend:

(A) modifizierte Kolloidteilchen eines Zinn(IV)-oxid-Zirkoniumoxid-Komposits mit Durchmessern von 4,5 bis 60 nm, die gebildet werden durch Beschichten der Oberfläche von Kernen mit kolloiden Teilchen eines Wolframoxid-Zinn(IV)-oxid-Siliciumdioxid-Komposits mit Durchmessern von 2 bis 7 nm, einem Verhältnis der Mengen, bezogen auf das Gewicht, von $W0_3/Sn0_2$ von 0,1 bis 100 und einem Verhältnis von Mengen, bezogen auf das Gewicht, von $SiO_2/SnO_2$ von 0,1 bis 100, wobei als Kerne verwendet werden: Kolloidteilchen eines Zinn(IV)-oxid-Zirkoniumoxid-Komposits mit Durchmessern von 4 bis 50 nm und einer Struktur, die gebildet wird durch Binden von Kolloidteilchen eines Zinn(IV)-oxids, erhalten durch Umsetzung von metallischem Zinn, einer organischen Säure, ausgewählt aus Oxalsäure oder einer organischen Säure, umfassend Oxalsäure als Hauptkomponente, und Wasserstoffperoxid, und Kolloidteilchen aus Zirkoniumoxid, und zwar miteinander, in Mengen, so dass ein Verhältnis der Mengen, bezogen auf das Gewicht, der Oxide von $ZrO_2/SnO_2$ 0,02 bis 1,0 beträgt, und
(B) eine Organosiliciumverbindung.

**2.** Verfahren zur Herstellung einer Kunststofflinse nach Anspruch 1, wobei die modifizierten Kolloidteilchen eines Zinn(IV)-oxid-Zirkoniumoxid-Komposits hergestellt werden gemäß einem Verfahren, umfassend die Stufen (a) bis (f):

Stufe (a): eine Stufe, umfassend das Bilden von Kolloidteilchen aus Zinn(IV)-oxid mit Durchmessern von 4 bis

50 nm durch Umsetzen von Wasserstoffperoxid und metallischem Zinn in einer wässrigen Lösung einer organischen Säure, ausgewählt aus Oxalsäure oder einer organischen Säure, umfassend Oxalsäure als Hauptkomponente, und zwar in einer solchen Weise, dass eine Konzentration von Zinn(IV)-oxid 40 Gew.-% oder geringer ist, während ein Verhältnis der Mengen, bezogen auf die Molzahl, von Wasserstoffperoxid zu metallischem Zinn $H_2O_2/Sn$ im Bereich von 2 bis 4 gehalten wird;

Stufe (b): eine Stufe, umfassend das Vermischen eines wässrigen Sols von Zinn(IV)-oxid, welches Kolloidteilchen von Zinn(IV)-oxid mit Durchmessern von 4 bis 50 nm umfasst, wie sie in Stufe (a) erhalten wurden, in einer Konzentration von 0,5 bis 50 Gew.-% als ein Oxid $SnO_2$ mit einer wässrigen Lösung, welche ein Oxyzirkoniumsalz in einer Konzentration von 0,5 bis 50 Gew.-% als ein Oxid $ZrO_2$ umfasst, in relativen Mengen, so dass ein Verhältnis der Mengen, bezogen auf das Gewicht, als die Oxide $ZrO_2/SnO_2$ 0,02 bis 1,0 beträgt;

Stufe (c): eine Stufe, umfassend das Bilden eines wässrigen Sols aus Zinn(IV)-oxid-Zirkoniumoxid-Komposit mit Teilchendurchmessern von 4 bis 50 nm durch eine Hitzebehandlung des in der Stufe (b) erhaltenen vermischten Fluids bei 60 bis 200°C, und zwar für 0,1 bis 50 Stunden;

Stufe (d): eine Stufe, umfassend das Herstellen einer wässrigen Lösung, umfassend ein Wolframsalz, ein Zinnsalz und ein Salz der Kieselsäure in relativen Mengen, so dass ein Verhältnis der Mengen, bezogen auf das Gewicht, von $W0_3/Sn0_2$ 0,1 bis 100 beträgt und ein Verhältnis der Mengen, bezogen auf das Gewicht, von $SiO_2/SnO_2$ 0,1 1 bis 100 beträgt, und Bilden eines Sols eines Wolframoxid-Zinn(IV)-oxid-Siliciumdioxid-Komposits durch Entfernen von Kationen in der hergestellten wässrigen Lösung;

Stufe (e): eine Stufe, umfassend das Bilden eines modifizierten wässrigen Sols eines Zinn(IV)-oxid-Zirkoniumoxid-Komposits durch Vermischen des in der Stufe (c) erhaltenen wässrigen Sols eines Zinn(IV)-oxid-Zirkoniumoxid-Komposits in einer Menge, so dass die Summe der Mengen von $ZrO_2$ und $SnO_2$ in dem wässrigen Sol 100 Gewichtsteile beträgt, mit dem in Stufe (d) erhaltenen Sol aus einem Wolframoxid-Zinn(IV)-oxid-Siliciumdioxid-Komposit mit Teilchendurchmessern von 2 bis 7 nm, einem Verhältnis der Mengen, bezogen auf das Gewicht, von $WO_3/SnO_2$ von 0,1 bis 100 und einem Verhältnis der Mengen, bezogen auf das Gewicht, von $SiO_2/SnO_2$ von 0,1 bis 100, in einer Menge, so dass eine Summe der Mengen von $WO_3$, $SnO_2$ und $SiO_2$ in dem Sol 2 bis 100 Gewichtsteile beträgt, bei 0 bis 100°C; und

Stufe (f): eine Stufe, umfassend das Inkontaktbringen des modifizierten wässrigen Sols eines in Stufe (e) erhaltenen Zinn(IV)-oxid-Zirkoniumoxid-Komposits mit einem Anionenaustauscher, um in dem Sol vorhandene Anionen zu entfernen.

**3.** Verfahren zur Herstellung einer Kunststofflinse nach einem der Ansprüche 1 oder 2, wobei die Organosiliciumverbindung der Komponente (B) mindestens eine Verbindung ist, ausgewählt aus Verbindungen der allgemeinen Formel (I):

$$R^1{}_nSi(OR^2)_{4-n} \cdots \qquad (I)$$

worin gilt: $R^1$ steht für eine einwertige Kohlenwasserstoffgruppe mit 1 bis 20 Kohlenstoffatomen, die funktionelle Gruppen aufweist oder nicht aufweist, $R^2$ steht für eine Alkylgruppe mit 1 bis 8 Kohlenstoffatomen, eine Arylgruppe mit 6 bis 10 Kohlenstoffatomen, eine Aralkylgruppe mit 7 bis 10 Kohlenstoffatomen oder eine Acylgruppe mit 2 bis 10 Kohlenstoffatomen, n steht für 0, 1 oder 2, eine Mehrzahl von Gruppen $R^1$ kann gleich oder verschieden voneinander sein, wenn eine Mehrzahl von $R^1$ vorhanden ist, und eine Mehrzahl von Gruppen $OR^2$ kann gleich oder verschieden voneinander sein, wenn eine Mehrzahl von $OR^2$ vorhanden ist;
Verbindungen der allgemeinen Formel (II):

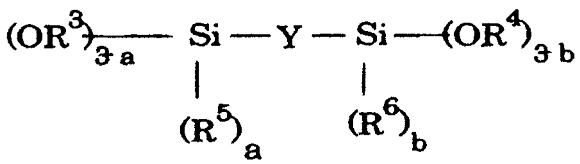

··· (II)

worin gilt: $R^3$ und $R^4$ stehen jeweils für eine Alkylgruppe mit 1 bis 4 Kohlenstoffatomen oder eine Acylgruppe mit 2 bis 4 Kohlenstoffatomen, die Gruppen $R^3$ und $R^4$ können gleich oder verschieden voneinander sein, $R^5$ und $R^6$ stehen jeweils für eine einwertige Kohlenwasserstoffgruppe mit 1 bis 5 Kohlenstoffatomen, die funktionelle Gruppen aufweist oder nicht aufweist, die Gruppen $R^5$ und $R^6$ können gleich oder verschieden voneinander sein, Y steht für eine zweiwertige Kohlenwasserstoffgruppe mit 2 bis 20 Kohlenstoffatomen, a und b stehen jeweils für 0 oder 1, eine Mehrzahl von Gruppen $OR^3$ kann gleich oder verschieden voneinander sein, und eine Mehrzahl von Gruppen

$OR^4$ kann gleich oder verschieden voneinander sein;
und Hydrolyseprodukte davon.

**4.** Verfahren zur Herstellung einer Kunststofflinse nach einem der Ansprüche 1 bis 3, wobei die Beschichtungszusammensetzung umfasst: die Kolloidteilchen der Komponente (A) in einer Menge von 1 bis 500 Gewichtsteilen als Feststoffkomponenten pro 100 Gewichtsteile der Organosiliciumverbindung der Komponente (B).

**5.** Verfahren zur Herstellung einer Kunststofflinse nach einem der Ansprüche 1 bis 4, wobei die Beschichtungszusammensetzung umfasst: (C) ein Metallsalz von Acetylaceton.

**6.** Verfahren zur Herstellung einer Kunststofflinse nach einem der Ansprüche 1 bis 5, welches umfasst: einen Film, gebildet durch Dampfabscheidung auf dem harten Beschichtungsfilm.

## Revendications

**1.** Procédé de production d'une lentille plastique qui comprend la formation d'un film de revêtement dur par le revêtement d'un substrat en plastique avec une composition de revêtement comprenant :

(A) des particules colloïdales modifiées d'un composite d'oxyde stannique-oxyde de zirconium présentant des diamètres de 4,5 à 60 nm qui sont formées par le revêtement de la surface de noyaux avec des particules colloïdales d'un composite d'oxyde de tungstène-oxyde stannique-dioxyde de silicium présentant des diamètres de 2 à 7 nm, un rapport de quantités en poids de $W0_3/Sn0_2$ de 0,1 à 100 et un rapport de quantités en poids de $SiO_2/SnO_2$ de 0,1 à 100 en utilisant comme noyaux des particules colloïdales d'un composite d'oxyde stannique-oxyde de zirconium présentant des diamètres de 4 à 50 nm et une structure formée par la liaison de particules colloïdales d'oxyde stannique obtenues par la réaction d'étain métallique, d'un acide organique choisi parmi l'acide oxalique ou un acide organique comprenant l'acide oxalique en tant que composant principal et de peroxyde d'hydrogène et de particules colloïdales d'oxyde de zirconium les unes aux autres en des quantités telles qu'un rapport de quantités en poids des oxydes de $ZrO_2/SnO_2$ soit de 0,02 à 1,0, et
(B) un composé d'organosilicium.

**2.** Procédé de production d'une lentille plastique selon la revendication 1, dans lequel les particules colloïdales modifiées d'un composite d'oxyde stannique-oxyde de zirconium sont produites selon un procédé comprenant les étapes (a) à (f) :

étape (a) : une étape comprenant la formation de particules colloïdales d'oxyde stannique présentant des diamètres de 4 à 50 nm en faisant réagir du peroxyde d'hydrogène et de l'étain métallique dans une solution aqueuse d'un acide organique choisi parmi l'acide oxalique ou un acide organique comprenant l'acide oxalique en tant que composant principal d'une manière telle qu'une concentration en oxyde stannique soit de 40 % en poids ou moins tandis qu'un rapport de quantités en mole du peroxyde d'hydrogène sur l'étain métallique $H_2O_2/Sn$ est maintenu dans une plage allant de 2 à 4 ;
étape (b) : une étape comprenant le mélange d'un sol aqueux d'oxyde stannique qui comprend des particules colloïdales d'oxyde stannique présentant des diamètres de 4 à 50 nm obtenues dans l'étape (a) à une concentration de 0,5 à 50 % en poids sous la forme d'un oxyde $SnO_2$ avec une solution aqueuse qui comprend un sel d'oxy zirconium à une concentration de 0,5 à 50 % en poids sous la forme d'un oxyde $ZrO_2$ en des quantités relatives telles qu'un rapport de quantités en poids sous la forme des oxydes $ZrO_2/SnO_2$ soit de 0,02 à 1,0 ;
étape (c) : une étape comprenant la formation d'un sol aqueux d'un composite d'oxyde stannique-oxyde de zirconium présentant des diamètres de particule de 4 à 50 nm par un traitement thermique d'un fluide mixte obtenu dans l'étape (b) à une température de 60 à 200 °C pendant 0,1 à 50 heures ;
étape (d) : une étape comprenant la préparation d'une solution aqueuse comprenant un sel de tungstène, un sel d'étain et un sel d'acide silicique en des quantités relatives telles qu'un rapport de quantités en poids de $W0_3/Sn0_2$ soit de 0,1 à 100 et qu'un rapport de quantités en poids de $SiO_2/SnO_2$ soit de 0,1 à 100, et la formation d'un sol d'un composite d'oxyde de tungstène-oxyde stannique-dioxyde de silicium par l'élimination des cations dans la solution aqueuse préparée ;
étape (e) : une étape comprenant la formation d'un sol aqueux modifié d'un composite d'oxyde stannique-oxyde de zirconium par le mélange du sol aqueux du composite d'oxyde stannique-oxyde de zirconium obtenu dans l'étape (c) en une quantité telle qu'un total des quantités de $ZrO_2$ et de $SnO_2$ dans le sol aqueux soit de 100 parties en poids avec le sol d'un composite d'oxyde de tungstène-oxyde stannique-dioxyde de silicium obtenu

dans l'étape (d) présentant des diamètres de particule de 2 à 7 nm, un rapport de quantités en poids de $WO_3/SnO_2$ de 0,1 à 100 et un rapport de quantités en poids de $SiO_2/SnO_2$ de 0,1 à 100 en une quantité telle qu'un total des quantités de $WO_3$, $SnO_2$ et $SiO_2$ dans le sol soit de 2 à 100 parties en poids à une température de 0 à 100 °C ; et
étape (f) : une étape comprenant la mise en contact du sol aqueux modifié d'un composite d'oxyde stannique-oxyde de zirconium obtenu dans l'étape (e) avec un échangeur d'anions pour éliminer les anions présents dans le sol.

**3.** Procédé de production d'une lentille plastique selon l'une quelconque des revendications 1 ou 2, dans lequel le composé d'organosilicium du composant (B) est au moins un composé choisi parmi les composés représentés par la formule générale (I) :

$$R^1_nSi(OR^2)_{4-n} \qquad (I)$$

dans laquelle $R^1$ représente un groupe hydrocarboné monovalent contenant 1 à 20 atomes de carbone qui possède ou non des groupes fonctionnels, $R^2$ représente un groupe alkyle contenant 1 à 8 atomes de carbone, un groupe aryle contenant 6 à 10 atomes de carbone, un groupe aralkyle contenant 7 à 10 atomes de carbone ou un groupe acyle contenant 2 à 10 atomes de carbone, n représente 0, 1 ou 2, une pluralité de groupes représentés par $R^1$ peuvent être identiques les uns aux autres ou différents les uns des autres quand une pluralité de $R^1$ est présente, et une pluralité de groupes représentés par $OR^2$ peuvent être identiques les uns aux autres ou différents les uns des autres quand une pluralité de $OR^2$ est présente ;
les composés représentés par la formule générale (II) :

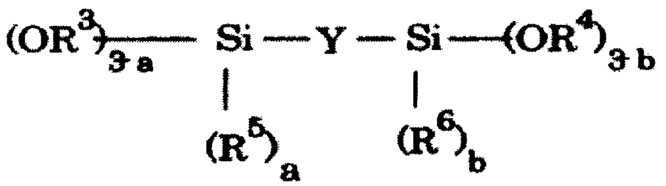

… (II)

dans laquelle $R^3$ et $R^4$ représentent chacun un groupe alkyle contenant 1 à 4 atomes de carbone ou un groupe acyle contenant 2 à 4 atomes de carbone, les groupes représentés par $R^3$ et $R^4$ peuvent être identiques les uns aux autres ou différents les uns des autres, $R^5$ et $R^6$ représentent chacun un groupe hydrocarboné monovalent contenant 1 à 5 atomes de carbone possédant ou non des groupes fonctionnels, les groupes représentés par $R^5$ et $R^6$ peuvent être identiques les uns aux autres ou différents les uns des autres, Y représente un groupe hydrocarboné divalent contenant 2 à 20 atomes de carbone, a et b représentent chacun 0 ou 1, une pluralité de groupes représentés par $OR^3$ peuvent être identiques les uns aux autres ou différents les uns des autres, et une pluralité de groupes représentés par $OR^4$ peuvent être identiques les uns aux autres ou différents les uns des autres ;
et leurs produits d'hydrolyse.

**4.** Procédé de production d'une lentille plastique selon l'une quelconque des revendications 1 à 3, dans lequel la composition de revêtement comprend les particules colloïdales du composant (A) en une quantité de 1 à 500 parties en poids en tant que composants solides pour 100 parties en poids du composé d'organosilicium du composant (B).

**5.** Procédé de production d'une lentille plastique selon l'une quelconque des revendications 1 à 4, dans lequel la composition de revêtement comprend (C) un sel métallique d'acétylacétone.

**6.** Procédé de production d'une lentille plastique selon l'une quelconque des revendications 1 à 5, qui comprend un film formé par dépôt en phase vapeur sur le film de revêtement dur.

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description


- EP 1041404 A2
- JP H01027635 A
- JP 2000281344 A